# EUROPÄISCHE PATENTSCHRIFT

(11) **EP 3 166 758 B1**
(45) Veröffentlichungstag und Bekanntmachung des Hinweises auf die Patenterteilung: **09.01.2019**
(21) Anmeldenummer: 15744889.5
(22) Anmeldetag: 13.07.2015
(51) Int. Cl.: B25H 3/02

(54) **STAPELANORDNUNG UND TRANSPORTBEHÄLTER MIT BUSSCHNITTSTELLEN**
STACK ARRANGEMENT AND TRANSPORT CONTAINER HAVING BUS INTERFACES
SYSTÈME EMPILÉ ET RÉCIPIENT DE TRANSPORT AVEC INTERFACE DE BUS

(30) Priorität: 12.07.2014 DE 102014010377; 10.07.2015 WO PCT/EP2015/065905
(43) Veröffentlichungstag der Anmeldung: 17.05.2017
(73) Patentinhaber: Festool GmbH, 73240 Wendlingen am Neckar (DE)
(72) Erfinder: FLEISCHMANN, Bernd, 73235 Weilheim (DE)
(74) Vertreter: Patentanwälte Bregenzer und Reule Partnerschaftsgesellschaft mbB
(86) Internationale Anmeldenummer: PCT/EP2015/066005
(87) Internationale Veröffentlichungsnummer: WO 2016/008860

(56) Entgegenhaltungen:
- WO-A1-2013/034340
- DE-A1-102008 013 588
- DE-A1-102012 213 415
- DE-U1-202010 017 022
- DE-U1-202011 107 073
- FR-A1- 2 946 231

## Beschreibung

Die Erfindung betrifft eine Stapelanordnung mit mindestens zwei in einer Stapelrichtung aufeinander stapelbaren Stapelelementen, von denen zumindest eines von einem Transportbehälter gebildet ist, der einen Behälterkorpus mit einer Stauaufnahme aufweist, die eine Maschinenaufnahme für eine elektrische oder pneumatische Hand-Werkzeugmaschine aufweist gemäß dem Oberbegriff des Anspruchs 1. Die Erfindung betrifft ferner ein Stapelelement und eine Transportbehälter.

Eine derartige Stapelanordnung ist beispielsweise in DE 20 2010 017 022 U1 beschrieben.

Es ist schon seit langem üblich, dass man Hand-Werkzeugmaschinen in stapelbaren Transportboxen oder Transportbehältern, in der Regel aus Kunststoff, transportiert. Man kann die Transportbehälter aufeinanderstapeln und in Stapelrichtung auf Zug miteinander verbinden, beispielsweise durch Laschen oder dergleichen, so dass man eine säulenartige Struktur erhält, die sich bequem transportieren lässt.

Die Transportbehälter einer derartigen Stapelanordnung sind mechanisch miteinander verknüpft und schützen die Hand-Werkzeugmaschinen.

Es ist möglich, beispielsweise einen Akkupack oder dergleichen durch die Wände der Transportbehälter hindurch induktiv aufzuladen oder ein Kabel in den Transportbehälter hinein zu verlegen. Das ist umständlich.

Es ist daher die Aufgabe der vorliegenden Erfindung, einen Transportbehälter oder eine einen derartigen Transportbehälter aufweisende Stapelanordnung mit einem verbesserten Versorgungskonzept bereitzustellen.
Zur Lösung der Aufgabe ist eine Stapelanordnung gemäß der technischen Lehre des Anspruchs 1 vorgesehen.
Man könnte auch sagen, dass die Busschnittstellen im aufeinandergestapelten Zustand der Stapelelemente eine Busverbindung untereinander realisieren.

Zur Lösung der Aufgabe ist ferner ein Transportbehälter gemäß der technischen Lehre des Anspruchs 14 vorgesehen.
Weiterhin ist zur Lösung der Aufgabe ein Stapelelement gemäß der technischen Lehre des Anspruchs 12 vorgesehen. Das Stapelelement ist beispielsweise als eine Stapelbasis ausgestaltet. Beispielsweise handelt es sich bei dem Stapelelement, das eine Busschnittstelle aufweist, um einen Staubsauger, einen Einsatz für ein Regal oder dergleichen, auf die Stapelbasis kann ein Stapelelement in Gestalt beispielsweise eines Transportbehälters aufgestapelt werden.
Der Begriff Stapelbasis soll aber nicht einschränkend in einem Sinne verstanden werden, dass die Stapelbasis sozusagen das unterste Element des Stapels oder der Stapelanordnung bilden muss, was durchaus möglich ist. Es ist auch möglich, dass die Stapelbasis sozusagen funktional verstanden wird, nämlich als Einspeiseschnittstelle und/oder Auskopplungsschnittstelle für die Busverbindung der Stapelanordnung ausgestaltet ist. Somit kann eine Stapelbasis nicht nur das unterste, sondern alternativ oder ergänzend auch ein oberstes Element der Stapelanordnung oder ein mittleres Element der Stapelanordnung darstellen.
Es ist ein Grundgedanke der vorliegenden Erfindung, dass der Transportbehälter oder mehrere Transportbehälter in Stapelrichtung nicht nur mechanisch miteinander verknüpft sind, beispielsweise sich zumindest abstützen, vorzugsweise jedoch in Stapelrichtung auf Zug miteinander verbunden sind, zum Beispiel durch Kuppelelemente, Laschen, feste oder bewegliche Haken oder dergleichen, sondern zusätzlich auch noch eine Busverbindung zwischen den einzelnen Stapelelementen, also beispielsweise einer Stapelbasis und dem darauf abgestellten Transportbehälter oder auch zwischen mehreren Transportbehältern der Stapelanordnung bereitzustellen. Die Busverbindung ermöglicht beispielsweise die Übertragung von Daten und/oder Energie oder dergleichen. Die Transportbehälter sind also in einer Reihenrichtung oder in der Stapelrichtung nebeneinander oder aufeinander angeordnet und kommunizieren über die Busverbindung miteinander und/oder mit einer Stapelbasis.

Eine zugfeste und/oder scherfeste Verbindung zwischen mindestens zwei Stapelelementen der Stapelanordnung kann auch zu einer optimierten Busverbindung zwischen den Stapelelementen beitragen. Die Buskoppler oder Busschnittstellen der Stapelelemente werden vorteilhaft durch die Stapelelemente in Bezug auf die Stapelrichtung zugfest verbindende Koppelmittel und/oder quer zur Stapelrichtung formschlüssig ineinander greifende Formschlusskonturen der Stapelelemente in einer stabilen Relativposition zueinander gehalten. Die Formschlusskonturen umfassen beispielsweise Haken und Hakenaufnahmen, Steckvorsprünge und Steckaufnahmen oder dergleichen. Derartige Formschlusskonturen sind beispielsweise an einem Behälterkorpus und/oder einem Deckel eines jeweiligen Transportbehälters angeordnet. Derartige Formschlusskonturen können aber auch beispielsweise an einem sandwichartig zwischen Transportbehältern angeordneten Stapelelement oberseitig und/oder unterseitig vorhanden sein.

Bei der Stapelbasis kann es sich beispielsweise um einen Staubsauger handeln. Es ist auch möglich, dass die Stapelbasis von einem Transportbehälter bereitgestellt wird. Weiterhin kann die Stapelbasis auch beispielsweise von einem Regalboden, mithin also einem Stauraummöbel, bereitgestellt werden. Der Regalboden kann beispielsweise in ein Kraftfahrzeug eingebaut sein.

Durch die Busverbindung ist auf sehr einfache Art eine Kommunikation herstellbar, ohne dass der Bediener besondere Maßnahmen ergreifen muss. Eine Busverbindung zeichnet sich insbesondere dadurch aus, dass möglichst wenig individuelle Leitungen miteinander verbunden werden müssen und gegebenenfalls auch mehrere vorhandene Busleitungen in einem Bedienschritt, nämlich beim Verbinden der Busschnittstellen miteinander, miteinander in Verbindung treten.

Die Busschnittstelle des Transportbehälters ist erfindungsgemäß mit einer Maschinenschnittstelle zum Anschluss einer Serviceschnittstelle der Hand-Werkzeugmaschine verbunden oder weist die Maschinenschnittstelle auf. Die Serviceschnittstelle ist also die maschinenseitige Schnittstelle, die Maschinenschnittstelle die Schnittstelle des Transportbehälters. Die Maschinenschnittstelle dient zur Übertragung von Daten und/oder elektrischer Energie und/oder Druckluft von und zur der Hand-Werkzeugmaschine. Somit können also Daten, Energie oder dergleichen von der Busschnittstelle über die Maschinenschnittstelle zur Serviceschnittstelle der Hand-Werkzeugmaschine gelangen. Jede der Schnittstellen kann drahtgebunden oder drahtlos sein.

Ein Stapelelement muss jedoch nicht in jedem Fall sozusagen einen Abzweig der Busverbindung für die oder eine Hand-Werkzeugmaschine bereitstellen. Eine Variante der Erfindung kann beispielsweise vorsehen, dass das mindestens eine Stapelelement der Stapelanordnung miteinander verbundene Busschnittstellen aufweist, die zur Übertragung mit einem untergestapelten oder einem aufgestapelten Stapelelement vorgesehen sind, so dass das in der Stapelanordnung angeordnete Stapelelement die Busverbindung zwischen den oberen und unteren Stapelelementen herstellt. Mithin ist also das sandwichartig dazwischen befindliche Stapelelement sozusagen nur ein Übertragungsglied für den Bus. Auch bei dieser Variante kann vorgesehen sein, dass der Bus des Sandwich-Transportbehälters oder Stapelelements einen Abzweig hat, das heißt eine Verbindung mit der vorgenannten Maschinenschnittstelle aufweist. Es ist aber auch denkbar, dass der Transportbehälter oder Stapelelements dieser Art die Busverbindung sozusagen nur durchschleift, also nicht beeinflusst.

Die Maschinenschnittstelle weist erfindungsgemäß eine Drahtlos-Übertragungsschnittstelle zur drahtlosen Übertragung von Daten und/oder Energie und vorteilhaft Anschlusskontakte zur Herstellung einer kontaktbehafteten Verbindung zu der Hand-Werkzeugmaschine auf. Bei der drahtlosen Kommunikation können beispielsweise Daten, elektrische Energie oder dergleichen übertragen werden. Die kontaktbehaftete oder leitungsgebundene Übertragung eignet sich insbesondere für die Energieübertragung. Mithin ist also bei dieser Ausprägung der Erfindung vorgesehen, dass die Serviceschnittstelle der Hand-Werkzeugmaschine beispielsweise über elektrische Kontakte eine Verbindung zur Maschinenschnittstelle erhält.

Eine drahtlose Kommunikation oder drahtlose Maschinenschnittstelle, insbesondere induktive Maschinenschnittstelle, ermöglicht beispielsweise ein induktives Laden, eine Übertragung per Bluetooth, WLAN oder dergleichen.

Die Busverbindung kann drahtlos oder drahtgebunden sein oder auch beides.

Möglich ist es beispielsweise, wenn Daten drahtlos übertragen werden, Energie jedoch drahtgebunden oder über elektrische Kontakte. Wenn also beispielsweise der elektrische Kontakt zwischen zwei Stapelelementen der Stapelanordnung abreißt, ist dies für eine Energieversorgung beispielsweise der Hand-Werkzeugmaschine in einem Transportbehälter unschädlich, es sei denn, sie würde gleichzeitig noch einen Arbeitsbetrieb leisten. Wenn jedoch nur beispielsweise ein Akkumulator aufgeladen wird, kann durchaus kurzzeitig der Energiefluss abreißen. Bei der Datenübertragung ist es aus Gründen der Datensicherheit, der Zuverlässigkeit des Datentransports und dergleichen vorteilhaft, wenn die Verbindung(en) nicht ohne weiteres abreißen. Daher ist in diesem Fall die drahtlose Übertragung bzw. drahtlose Busverbindung bevorzugt.

Besonders bevorzugt ist jedoch, wenn die Busverbindung ausschließlich drahtlos ist. Insbesondere ist eine induktive Energieübertragung in der Busverbindung bzw. zwischen den Busschnittstellen bevorzugt.

Zweckmäßigerweise umfasst die Busschnittstelle eines Transportbehälters mindestens ein induktives Kopplungsmittel zum induktiven Übertragen von Energie und/oder Daten. Die Busschnittstelle kann also beispielsweise zur induktiven Übertragung von Energie oder Daten zu einer benachbarten Busschnittstelle und/oder zum Empfangen von induktiv übertragener Energie oder Daten von einer benachbarten Busschnittstelle ausgestaltet sein. Das Kopplungsmittel umfasst also beispielsweise eine Übertragerspule.

Die drahtlose Übertragung zwischen Busschnittstellen umfasst beispielsweise eine Funkübertragung oder auch eine optische Übertragung, beispielsweise über WLAN, Bluetooth, Infrarot oder dergleichen. Die jeweilige Busschnittstelle umfasst also beispielsweise optische Kommunikationsmittel und/oder Funk-Kommunikationsmittel. Die Kommunikationsmittel können reine Empfangsmittel, reine Sendemittel oder besonders bevorzugt zum Empfangen und zum Senden ausgestaltete Kommunikationsmittel sein oder umfassen.

Eine besonders bevorzugte Ausführungsform der Erfindung sieht vor, dass die Stapelelemente der Stapelanordnung ausschließlich drahtlos mit einander kommunizieren. Eine Beschädigung von elektrischen Kontakten ist nicht zu befürchten.

Eine kontaktbehaftete Busverbindung ist aber auch möglich:
Die Busschnittstelle umfasst zweckmäßigerweise insbesondere an Steckverbindern angeordnete elektrische Kontaktflächen an der Oberseite eines unteren Stapelelementes und an der Unterseite eines auf das Unterteil aufgestapelten oberen Stapelelementes. Die Kontaktflächen - es müssen nicht Steckverbinder sein, sondern können auch beispielsweise Planflächen sein oder angefederte Elemente - sind zweckmäßigerweise so an der Unterseite bzw. der zugeordneten Oberseite so orientiert, dass sie die Busverbindung beim Aufstapeln der Stapelelemente sozusagen automatisch herstellen. Der Bediener braucht also in diesem Fall nur noch die Stapelelemente aufeinander zu stapeln und stellt dabei gleichzeitig elektrische Kontaktverbindungen für die Busverbindung her.

Die Steckachse von Steckverbindern verläuft zweckmäßigerweise parallel zu der Stapelrichtung, so dass die Steckverbinder durch Aufstapeln eines Stapelelements auf ein anderes Stapelelement ineinander steckbar sind. Wenn also beispielsweise ein Transportbehälter auf die Stapelbasis oder einen unteren Transportbehälter aufgestapelt wird, steckt der Bediener sozusagen gleichzeitig die Steckverbinder ineinander. Die Steckverbinder können dabei zusätzlich noch eine mechanische Sicherung darstellen, d.h. dass sie beispielsweise den Stapel oder die Stapelanordnung quer zu der Stapelrichtung fixieren oder formschlüssig festhalten.

Sowohl bei kontaktbehafteter Übertragung von Daten und/oder Energie zwischen den Busschnittstellen oder über die Busschnittstellen als auch bei drahtloser Übertragung von Daten und/oder Energie ist die folgende Maßnahme vorteilhaft.

Zweckmäßigerweise ist vorgesehen, dass die Busschnittstellen im aufeinandergestapelten Zustand der Stapelelemente miteinander fluchtend positioniert sind. Beispielsweise sind einander gegenüberliegende zur insbesondere drahtlosen Energieübertragung und/oder Datenübertragung ausgestaltete Koppelmittel miteinander kommunizierender Busschnittstellen benachbarter Stapelelemente, beispielsweise Spulen oder Sendeantennen und Empfangsantennen und/oder elektrische Kontakte, miteinander fluchtend. Die Querschnitte von derartigen Koppelmitteln, beispielsweise Spulen oder Antennen, überdecken sich zweckmäßigerweise exakt oder zumindest im Wesentlichen. Zwischen den Koppelmitteln ist zweckmäßigerweise kein Versatz oder allenfalls ein geringer Versatz quer zur Stapelrichtung oder in Bezug auf die Stapelrichtung.

Bei elektrischen Kontakten ist bereits oben deutlich geworden, dass eine örtliche Fixierung oder Positionierung derselben bei miteinander kommunizierenden Busschnittstellen von aufeinandergestapelten Stapelelementen vorteilhaft ist. Aber auch bei einer induktiven Übertragung oder einer sonstigen drahtlosen Übertragung ist es vorteilhaft, wenn die Busschnittstellen miteinander fluchten und/oder einander zumindest im Wesentlichen oder vollständig überdecken und/oder keinen oder allenfalls einen geringen seitlichen Versatz bezüglich der Stapelrichtung haben. Quer zur Stapelrichtung ist zweckmäßigerweise kein Versatz oder allenfalls ein geringer Versatz zwischen den Busschnittstellen benachbarter oder aufeinandergestapelter Stapelelemente vorhanden. Beispielsweise sind induktive Spulen zur induktiven Stromübertragung und/oder Datenübertragung oder Antennen zur Stromübertragung und/oder Datenübertragung miteinander fluchtend. Das kann einen optimalen oder günstigen Wirkungsgrad und/oder eine optimale oder günstige Daten- und/oder Energie-Übertragungsqualität gewährleisten oder ermöglichen.

Vorteilhaft ist vorgesehen, dass zur Energieübertragung und/oder Datenübertragung vorgesehene, einander gegenüberliegende und/oder einander zugeordnete Koppelmittel drahtlos miteinander kommunizierender Busschnittstellen benachbarter Stapelelemente, beispielsweise Spulen oder Sendeantennen und Empfangsantennen, unmittelbar an einander direkt gegenüberliegenden Wänden oder Wandbereichen der jeweiligen Stapelelemente, beispielsweise Transportboxen, angeordnet sind.

Die Busschnittstellen umfassen zweckmäßigerweise mindestens eine Lasche, die ein oberes Stapelelement mit einem unteren Stapelelement der Stapelanordnung miteinander verbindet und im montierten Zustand mit einem Seitenwandabschnitt des Behälterkorpus des oberen Stapelelementes, vorzugsweise auch mit einem Seitenwandabschnitt des Behälterkorpus des unteren Stapelelementes verbunden ist. Die Lasche kann beispielsweise ein elektrischer Verbindungsstecker sein, mit dem nur die elektrische Verbindung, jedoch keine mechanisch belastbare Kopplung hergestellt wird. Es ist zum Beispiel denkbar, dass zwischen zwei Steckkontakten eines Steckverbinders, von denen jeweils einer in eines von zwei aufeinandergestapelten Stapelelementen eingreift, eine flexible Leitungsverbindung vorgesehen ist. Es ist aber vorteilhaft, wenn hier eine feste Leitungsverbindung vorgesehen ist, so dass der Steckverbinder bzw. die Lasche auch eine mechanische Sicherung der Stapelanordnung in Stapelrichtung, d.h. auf Zug in Stapelrichtung, herstellt.

Die mindestens eine Lasche ist zweckmäßigerweise an einem der Stapelelemente beweglich gelagert, also unverlierbar. Die Lagerung kann beispielsweise eine Drehlagerung, eine Linearlager oder eine Kombination davon vorsehen. Bevorzugt weist die Lasche auch Steckmittel zum Einstecken in mindestens eines der Stapelelemente auf. So ist beispielsweise eine Lasche möglich, die einerseits an einem der Transportbehälter oder Stapelelemente beweglich gelagert ist und lösbar in ein anderes, darunter oder darüber angeordnetes Stapelelement einsteckbar ist. Es ist aber auch möglich, dass eine Lasche vorgesehen ist, die beispielsweise in der Art einer Brücke oder eines U-förmigen Teils sozusagen von der Seite her in die direkt aufeinandergestapelten Stapelelemente eingesteckt wird.

Besonders bevorzugt ist eine Ausführungsform der Erfindung, bei der die mindestens eine Lasche ein insbesondere drehbar gelagertes Riegelelement umfasst, das in einer Verriegelungsstellung zwei Stapelelemente miteinander verriegelt und in einer Lösestellung die Stapelelemente freigibt. Das Riegelelement ist in der Verriegelungsstellung in elektrischem Kontakt mit Buskontakten der durch das Riegelelement verbundenen Stapelelemente und verbindet diese elektrisch. In einer Lösestellung ist das Riegelelement mit den Buskontakten außer Eingriff oder außer Kontakt, zumindest mit den Buskontakten eines der beiden Stapelelemente. Der Riegel kann beispielsweise ein Schwenkriegel, Schieberiegel oder auch einen kombiniert schwenkbar und verschieblich gelagerter Riegel sein. Der Riegel hat zweckmäßigerweise eine Doppelfunktion, nämlich einerseits die Stapelelemente miteinander zu verriegeln, insbesondere gegenüber einem Lösen aus der Stapelanordnung, andererseits auch die Funktion, die Busverbindung herzustellen.

Mindestens eines der Stapelelemente oder der Transportbehälter weist zweckmäßigerweise eine drahtlose oder leitungsgebundene Einspeiseschnittstelle auf, zum Beispiel einen Anschluss für ein elektrisches Energienetz, so dass über die Einspeiseschnittstelle beispielsweise elektrische Energie, Druckluft oder dergleichen einspeisbar ist.

Mindestens eines der Stapelelemente, insbesondere die Stapelbasis oder ein Transportbehälter, weist zweckmäßigerweise auch eine Kommunikationsschnittstelle zur drahtlosen oder leitungsgebundenen Kommunikation bzw. zum drahtlosen oder leitungsgebundenen Anschluss der Busverbindung an ein Kommunikationsnetz, zum Beispiel ein Local Area Network, oder zur Kommunikation mit einem Bediengerät auf. Über die Kommunikationsschnittstelle erhält beispielsweise ein Bediengerät, insbesondere ein Smartphone oder einen Computer, Zugang zu der Busverbindung, so dass es über die Busverbindung mit der Stapelanordnung und zweckmäßigerweise auch der darin angeordneten bzw. aufbewahrten Hand-Werkzeugmaschine kommunizieren kann.

Das Bediengerät eignet sich beispielsweise dazu, Betriebszustände, Statusinformationen oder dergleichen, über die Busverbindung oder den Bus der Stapelanordnung aus einem Speicher der jeweiligen Hand-Werkzeugmaschine auszulesen. Aber auch eine Parametrierung, beispielsweise eine Vorgabe von Höchstdrehzahlen oder dergleichen, kann über die Busverbindung geschehen, das heißt dass das Bediengerät oder der Computer beispielsweise über die Busverbindung, die Maschinenschnittstelle und die Serviceschnittstelle Zugang zu einer Steuerung oder einem Speicher der Hand-Werkzeugmaschine erhalten, um diesen zu parametrieren.

Die Einspeiseschnittstelle oder Kommunikationsschnittstelle umfasst zweckmäßigerweise eine Steckbuchse oder Steckdose.

Die Kommunikationsschnittstelle kann auch eine Funkschnittstelle umfassen, eine Infrarotschnittstelle, eine WLAN-Schnittstelle oder eine Bluetooth-Schnittstelle. Weiterhin ist auch eine leitungsgebundene Kommunikation möglich.

Bei dem die Einspeiseschnittstelle oder die Kommunikationsschnittstelle aufweisenden Stapelelement handelt es sich vorzugsweise um die Stapelbasis, zum Beispiel um einen Staubsauger oder den vorgenannten Regalboden oder eine auf dem Regalboden angeordnete Stapelbasis. Es ist aber auch möglich, dass eine Einspeiseschnittstelle oder Kommunikationsschnittstelle oder beide an einem Transportbehälter angeordnet sind, der zum Transportieren einer Hand-Werkzeugmaschine geeignet ist.

Die Einspeiseschnittstelle weist zweckmäßigerweise eine Bereitstellungseinrichtung zur Bereitstellung einer Versorgungsspannung anhand der über die Einspeiseschnittstelle eingespeisten elektrischen Energie oder Druckluft auf, wobei die Versorgungsspannung für eine in der Stapelanordnung aufbewahrte elektrische Hand-Werkzeugmaschine geeignet ist. Mit anderen Worten kann beispielsweise ein Druckluft-Wandler oder Druckluftantrieb für einen elektrischen Energie-Generator vorgesehen sein. Bevorzugt ist jedoch eine elektrische Energiewandlung, beispielsweise über einen induktiven oder elektronischen Transformator.

Der Transportbehälter weist zweckmäßigerweise mindestens eine Ladestation für die Hand-Werkzeugmaschine und/oder einen von der Hand-Werkzeugmaschine separaten Energiespeicher, zum Beispiel einen Akkupack, auf. So ist beispielsweise vorgesehen, dass die Hand-Werkzeugmaschine oder der Energiespeicher drahtlos, also vorzugsweise induktiv, aufgeladen werden. Es ist aber auch eine kontaktbehaftete Aufladung möglich, d.h. dass beispielsweise Ladekontakte vorgesehen sind. Es ist beispielsweise denkbar, dass die Ladestation Anschlusskabel aufweist, die in entsprechende Anschlusskontakte, z.B. Versorgungsbuchsen, der Hand-Werkzeugmaschine oder des Energiespeichers einsteckbar sind. Besonders bevorzugt ist es, wenn ein Akku oder Energiespeicher eine Maschine verbleiben kann, wenn er über die Ladestation aufgeladen wird. Bevorzugt ist auch ein Zusatzladeplatz für beispielsweise einen Reserve-Energiespeicher oder Reserveakku vorgesehen.

Das erfindungsgemäße Konzept ermöglicht auch die effektive Nutzung von Sensorik.

Bevorzugt weist der Transportbehälter mindestens einen Sensor zur Erfassung eines Betriebsstatus, zum Beispiel einer Anzahl von Betriebsstunden, eines Serviceintervalls und/oder einer Störungsinformation auf. Auch ein Ladezustand eines Energiespeichers der Hand-Werkzeugmaschine kann über den Sensor erfasst werden. Der Sensor umfasst beispielsweise ein Funkmodul zur drahtlosen Kommunikation mit einer Steuerung oder einem Speicher der Hand-Werkzeugmaschine oder des Energiespeichers.

Bevorzugt ist es, wenn der Transportbehälter zusätzlich noch einen Speicher für Verbrauchsmaterial, beispielsweise Schleifmittel, Arbeitswerkzeuge (Bohrer, Fräser, Sägeblätter, etc.) oder dergleichen, aufweist. Besonders bevorzugt ist es, wenn ein Sensor vorgesehen ist, der zur Erfassung einer Mengeninformation über in dem Transportbehälter vorhandenes Verbrauchsmaterial vorgesehen ist. Beispielsweise kann eine optische und/oder induktive und/oder kapazitive Erfassung von Verbrauchsmaterial erfolgen.

Weiterhin ist es zweckmäßig, wenn ein Sensor zur Erfassung einer Störung und Erzeugung einer Störungsinformation vorgesehen ist. Wenn beispielsweise die Hand-Werkzeugmaschine oder deren Energiespeicher über eine rote Signalisierung oder eine dergleichen andere farbige Signalisierung kenntlich machen, dass eine Störung vorsieht, kann der Sensor beispielsweise als optischer Sensor ausgestattet sein und diese entsprechende Farbigkeit erfassen und als Störungsinformation weiter melden.

Bevorzugt ist es auch, wenn mindestens ein Stapelelement der Stapelanordnung eine Ortungseinrichtung zur drahtlosen Ortung des Stapelelements oder der Stapelanordnung als Ganzes anhand eines Bediengeräts, zum Beispiel der vorgenannten Smartphones, aufweist. Bei der Ortungseinrichtung kann es sich beispielsweise um einen Positionssender handeln.

Bei dem oder einem Transportbehälter ist es vorteilhaft, wenn die Maschinenaufnahme in einem Behältereinsatz vorgesehen ist, der auf einem Boden der Stauaufnahme abgestützt ist und gegen eine Bewegung entlang des Bodens anhand von Befestigungsmitteln ortsfest festlegbar ist und/oder sich an mindestens einer Umfangsseitenwand, welche die Stauaufnahme seitlich begrenzt, abstützt.

An dem Behältereinsatz sind zweckmäßigerweise Verbindungsmittel vorgesehen, die dann, wenn der Behältereinsatz in der Stauaufnahme angeordnet ist, mit der Busschnittstelle verbunden sind und zur Herstellung einer Verbindung mit der Hand-Werkzeugmaschine vorgesehen sind. An der Stauaufnahme ist vorteilhaft eine Einsatzschnittstelle und an dem Behältereinsatz zweckmäßigerweise eine Korpusschnittstelle angeordnet, die bei in der Stauaufnahme angeordnetem Behältereinsatz miteinander zur Übertragung von Daten und/oder elektrischer Energie und/oder Druckluft verbunden sind. Beispielsweise kommunizieren die Verbindungsmittel mit der bereits erläuterten Maschinenschnittstelle. Mit anderen Worten ist es vorteilhaft, wenn dann quasi über den auswechselbaren Behältereinsatz eine Verbindung zwischen einerseits dem Bus und andererseits der Serviceschnittstelle oder der Hand-Werkzeugmaschine als Ganzem möglich ist.

Die Verbindungsmittel umfassen zweckmäßigerweise elektrische Kontakte, die eine lösbare elektrische Verbindung zu Kontakten der Busschnittstelle herstellen können. Beispielsweise sind diese Kontakte dann mit Busleitungen verbunden. Beim Einstecken oder Einsetzen des Behältereinsatzes in die Stauaufnahme wird gleichzeitig vorzugsweise der elektrische Kontakt der Verbindungsmittel mit der Busverbindung, beispielsweise den Buskontakten, hergestellt. Es ist auch möglich, dass die Verbindungsmittel zu einer drahtlosen, z.B. induktiven, Daten oder Energieübertragung ausgestaltet sind.

Es sei allerdings bemerkt, dass selbstverständlich auch ein nicht aktiver oder elektrisch verbindender Behältereinsatz möglich ist, der keine Verbindung zu der Busverbindung bzw. zu den Busschnittstellen hat.

Es ist dabei ein Grundgedanke, dass der Behältereinsatz individuell für die Hand-Werkzeugmaschine ausgestaltet ist, beispielsweise dass die Maschinenaufnahme Formschlusskonturen hat, die vorzugsweise passgenau zur Außenkontur der Hand-Werkzeugmaschine passen. Zugleich können aber auch weitere Funktionen geleistet werden, nämlich dass beispielsweise Daten, elektrische Energie oder Druckluft über den Behältereinsatz zu der Hand-Werkzeugmaschine gelangen oder von der Hand-Werkzeugmaschine gesendet oder abgegeben werden können. Somit können beispielsweise am Behältereinsatz individuell zu der Hand-Werkzeugmaschine passende Einrichtungen vorgesehen sein, beispielsweise eine Ladestation, eine Kommunikationsschnittstelle (drahtlos oder leitungsgebunden oder beides) zur Kommunikation mit einer Serviceschnittstelle der Hand-Werkzeugmaschine oder dergleichen. Die Einrichtungen sind Ideal passend zur jeweiligen Hand-Werkzeugmaschine an Ort und Stelle des Behältereinsatzes positioniert, beispielsweise nahe bei einem Akkumulator, bei einem Speicher oder einer Steuerung der Hand-Werkzeugmaschine oder dergleichen.

Der Behältereinsatz kann sich unten direkt am Boden abstützen. Es ist auch möglich, dass der Behältereinsatz bezüglich des Bodens einen Abstand hat, dennoch aber abgestützt ist. Der Behältereinsatz kann beispielsweise über mindestens eine Seitenwand bezüglich des Bodens abgestützt sein. Es ist z.B. möglich, dass von der Seitenwand im Abstand zum Boden mindestens ein Stützvorsprung absteht, der den Behältereinsatz trägt. Die Umfangsseitenwand kann eine Außenwand des Transportbehälters sein. Es ist auch möglich, dass eine Innenwand des Transportbehälters als die oder eine den Behältereinsatz stützende Umfangsseitenwand vorgesehen ist.

Vorteilhaft ist, wenn an dem Behältereinsatz mindestens eine Maschinenschnittstelle zur Verbindung mit einer Serviceschnittstelle der Hand-Werkzeugmaschine angeordnet ist, wobei die Maschinenschnittstelle mit der Korpusschnittstelle zur Übertragung von Daten und/oder elektrischer Energie und/oder Druckluft von und/oder zu der Serviceschnittstelle verbunden ist. Die Maschinenschnittstelle stellt beispielsweise die vorgenannte Ladestation bereit oder ermöglicht eine Parametrierung oder Service-Überprüfung der Hand-Werkzeugmaschine und/oder deren Energiespeicher oder eines Energiespeichers, der nicht an der Hand-Werkzeugmaschine angeordnet ist.

Bevorzugt hat der Transportbehälter eine mit der Korpusschnittstelle verbundene drahtlose oder leitungsgebundene Einspeiseschnittstelle, zum Beispiel einen Anschluss für ein elektrisches Energienetz (zum Beispiel ein Netzkabel) zum Einspeisen von elektrischer Energie oder Druckluft oder beidem. Bevorzugt ist die Korpusschnittstelle auch mit einer Kommunikationsschnittelle zu einem drahtlosen oder leitungsgebundenen Anschluss an ein Kommunikationsnetz, zum Beispiel ein Local Area Network, und/oder zur Kommunikation mit einem Bediengerät vorgesehen. Der Transportbehälter kann sozusagen von außen her mit elektrischer Energie, Druckluft oder dergleichen für die Hand-Werkzeugmaschine oder auch eine Einrichtung des Transportbehälters versorgt werden, wobei der Behältereinsatz sozusagen die Brücke zwischen einerseits dem Transportbehälter bzw. der Einspeiseschnittstelle oder Kommunikationsschnittstelle und andererseits der Hand-Werkzeugmaschine bereitstellt, beispielsweise deren Serviceschnittstelle.

Bevorzugt weist der Transportbehälter eine Identifizierungseinrichtung zur Identifizierung der Hand-Werkzeugmaschine und/oder des Transportbehälters und/oder des Behältereinsatzes auf. Die Identifizierungseinrichtung kann beispielsweise drahtlos, auf optischem Wege oder dergleichen feststellen, welcher Typ von Hand-Werkzeugmaschine, Transportbehälter oder Behältereinsatz vorliegt. Auch eine Seriennummer kann auf diesem Wege beispielsweise ausgelesen werden.

Es ist möglich, dass am Behältereinsatz ein Barcode, ein Funkmodul oder dergleichen vorgesehen ist, mit dem der Behältereinsatz identifizierbar ist.

Der Transportbehälter weist zweckmäßigerweise eine Kühleinrichtung für die Hand-Werkzeugmaschine, insbesondere einen elektrischen Energiespeicher der Hand-Werkzeugmaschine oder einen elektrischen Energiespeicher als solches (nicht verbunden mit der Hand-Werkzeugmaschine, zum Beispiel als Reserveakku) auf. Die Kühleinrichtung, beispielsweise ein Ventilator, ein thermoelektrisches Kühlelement oder dergleichen, ist beispielsweise am Behältereinsatz oder einer sonstigen Stelle des Transportbehälters angeordnet.

Der Behältereinsatz könnte dauerhaft in der Stauaufnahme verbleiben, d.h. er wird beispielsweise in die Stauaufnahme eingeklebt, verschraubt oder dergleichen. Bevorzugt ist es jedoch, wenn der Behältereinsatz lösbar in der Stauaufnahme angeordnet ist, so dass er leicht auswechselbar ist. Beispielsweise ist der Behältereinsatz in der Art eines Steckteils in die Stauaufnahme einsteckbar. Mit anderen Worten ist die Stauaufnahme vorzugsweise als eine Steckaufnahme ausgestaltet.

Zum Halten eines Behältereinsatzes in einer jeweiligen Stauaufnahme eines Transportbehälters können auch Klemmmittel, Rastmittel oder dergleichen andere Befestigungsmittel vorgesehen sein. Beispielsweise kann auch mindestens eine Halteklammer, mindestens ein Haltehaken, mindestens ein Rasthaken oder dergleichen dazu vorgesehen sein, einen Behältereinsatz in der Stauaufnahme ortsfest festzulegen. Durch eine einfache Rastbetätigung, beispielsweise ein Drücken auf einen Rastvorsprung, kann der Behältereinsatz dann wieder aus der Stauaufnahme entnommen werden. Auch ein Verschrauben mit beispielsweise mindestens einer oder mehreren Schrauben ist ohne weiteres denkbar.

An dieser Stelle sei bemerkt, dass selbstverständlich auch zwei oder weitere Behältereinsätze in der Stauaufnahme ortsfest und/oder formschlüssig aufgenommen sein können. Dabei ist es beispielsweise denkbar, dass der Transportbehälter mehrere Abteilungen hat, in die jeweils ein Behältereinsatz einsetzbar ist. Es ist aber auch möglich, dass sich alle Behältereinsätze oder mindestens zwei Behältereinsätze sozusagen gegenseitig abstützen und somit einen sicheren Halt in der Stauaufnahme finden. Dabei ist denkbar, dass mindestens ein innerer Behältereinsatz von Behältereinsätzen umgeben ist, die sich an der Umfangsseitenwand abstützen, sich selbst aber nicht an einer Umfangsseitenwand direkt abstützt.

Bevorzugt bildet der Transportbehälter einen Bestandteil eines Systems, bei dem wahlweise in der Stauaufnahme ein Behältereinsatz eines ersten Typs mit einer zu einer Hand-Werkzeugmaschine eines ersten Typs passenden Maschinenaufnahme, also einer Maschinenaufnahme eines ersten Typs, oder ein Behältereinsatz eines zweiten Typs mit einer zu einer Hand-Werkzeugmaschine eines zweiten Typs passenden Maschinenaufnahme eines zweiten Typs anordenbar sind. Die Korpusschnittstellen der Behältereinsätze sind zumindest im Wesentlichen an derselben Stelle in Bezug zu der Einsatzschnittstelle angeordnet, wenn der jeweilige Behältereinsatz (der erste und/oder zweite Behältereinsatz) in der Stauaufnahme angeordnet ist.

Die Behältereinsätze weisen zweckmäßigerweise Maschinenschnittstellen für die Hand-Werkzeugmaschinen auf, die sozusagen typisiert oder individuell angepasst sind. Die Maschinenschnittstelle des Behältereinsatzes des ersten Typs ist beispielsweise durch vorbestimmte Drahtlos-Schnittstelle (z.B. Bluetooth, WLAN oder dergleichen) und/oder funktional (z.B. Art der Kommunikation mit der Hand-Werkzeugmaschine) und/oder örtlich (zum Beispiel Anordnung von Kontakten oder Drahtlos-Übertragungselementen) an die Hand-Werkzeugmaschine des ersten Typs angepasst. Die Maschinenschnittstelle des Behältereinsatzes des zweiten Typs ist in mindestens einer Eigenschaft unterschiedlich zu der Maschinenschnittstelle des ersten Typs und jedenfalls funktional und/oder örtlich an die Hand-Werkzeugmaschine des zweiten Typs angepasst. Es ist dabei möglich, dass die Maschinenaufnahmen der beiden Behältereinsätze gleich oder unterschiedlich sind. Wenn also beispielsweise eine zweite Hand-Werkzeugmaschine mit einer erweiterten Funktionalität oder einer anderen Funktionalität als eine erste Hand-Werkzeugmaschine in dem Transportbehälter aufgenommen werden soll, verwendet der Bediener wahlweise den geeigneten ersten oder zweiten Behältereinsatz, wobei beispielsweise ein Behältereinsatz eine Funkübertragung ermöglicht, der andere Behältereinsatz eine kontaktbehaftete Übertragung von Daten und/oder Energie vorsieht.

Bevorzugt ist die Stauaufnahme von Umfangsseitenwänden begrenzt und durch eine Stauaufnahme-Öffnung an einer Oberseite des Behälters zugänglich. Beispielsweise kann der Behälter oben offen sein. Eine Ausführungsform sieht vor, dass nach oben ein Henkel oder Handgriff starr vor die Stauaufnahme-Öffnung vorsteht. Es ist aber auch möglich, dass Transportbehälter vorteilhaft einen Deckel zum Verschließen der Stauaufnahme-Öffnung aufweist.

Bevorzugt ist der Transportbehälter als ein Stapelelement für eine Stapelanordnung nutzbar, wobei der Transportbehälter mit seiner Unterseite auf eine Stapelbasis, zum Beispiel einen weiteren Transportbehälter, einen Staubsauger oder dergleichen, aufstapelbar ist und/oder mit seiner Oberseite eine Stapelbasis für ein weiteres aufstapelbares Stapelelement, zum Beispiel einen weiteren Transportbehälter, insbesondere erfindungsgemäßer Art, bildet.

Die Stapelelemente der Stapelanordnung sind vorzugsweise in Bezug auf die Stapelrichtung, in der sie aufeinander aufgestapelt sind, zugfest miteinander verknüpfbar oder koppelbar, beispielsweise durch entsprechende Formschlusshintergriffe, Koppelelemente, Riegel, Laschen oder dergleichen. Das wird in der Zeichnung noch deutlicher. Weiterhin sind Formschlusskonturen vorteilhaft, die die Stapelelemente quer zur Stapelrichtung, also sozusagen scherfest quer zur Stapelrichtung, in Eingriff miteinander halten.

Bevorzugt ist der Transportbehälter zur Übertragung von Daten und/oder Energie zwischen den Stapelelementen der Stapelanordnung mit mindestens einer Busschnittstelle versehen, die mit der Korpusschnittstelle verbunden ist. Die Busschnittstelle bildet beim Aufeinanderstapeln der Stapelelemente eine Busverbindung zu einer Busschnittstelle des untergestapelten oder aufgestapelten Stapelelements. Mithin können also über den Bus bzw. die Busverbindung Energie und/oder Daten zur Korpusschnittstelle und somit weiter auch zur Einsatzschnittstelle und weiterhin der Maschinenschnittstelle übertragen werden.

Nachfolgend wird ein Ausführungsbeispiel der Erfindung anhand der Zeichnung erläutert. Es zeigen:
- Figur 1: einer Stapelanordnung mit einer Stapelbasis sowie zwei Transportbehältern als Stapelelemente,
- Figur 2: eine Anordnung noch nicht aufeinander gestapelter Stapelelemente, nämlich eines Staubsaugers als Stapelbasis, eines Transportbehälters sowie einer Werkzeugmaschine zur Aufbewahrung in dem Transportbehälter, jedoch bei einer Werkstückbearbeitung,
- Figur 3: eine Draufsicht auf einen ersten Transportbehälter der Stapelanordnung gemäß Figur 1 mit einer Akkumulator-Hand-Werkzeugmaschine, insbesondere einem Schraubgerät,
- Figur 4: einen weiteren Transportbehälter der Stapelanordnung gemäß Figur 1 mit einer für einen Netzbetrieb vorgesehenen Hand-Werkzeugmaschine, vorliegend einer Säge, und
- Figur 5: eine Seitenansicht des Transportbehälters gemäß Figur 2.

Eine Stapelanordnung 10 umfasst beispielsweise Stapelelemente 11, 12, 13, die aufeinander aufgestapelt und fest miteinander verbunden sind, jedenfalls die beiden oberen Stapelelemente 12 und 13. Das untere Stapelelement 11 bildet eine Stapelbasis 14, auf welche die Stapelelemente 12 und 13 aufgestapelt sind.

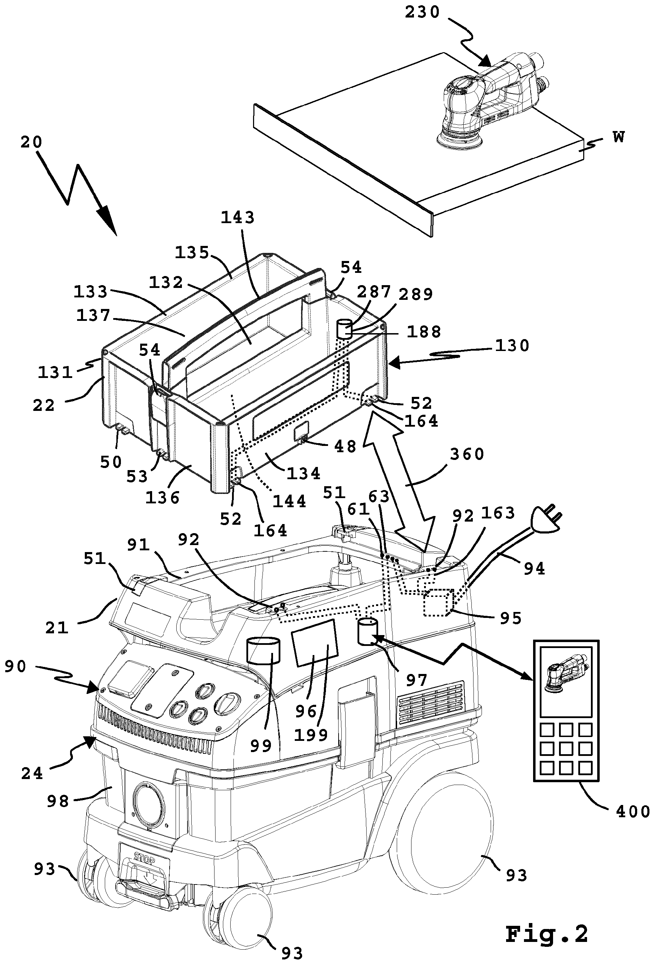

Bei der Anordnung gemäß Figur 2 ist eine nicht fertig gestapelte Stapelanordnung 20 dargestellt, bei denen ein Staubsauger 90 ein erstes Stapelelement 21 und ein oben offener Transportbehälter ein zweites Stapelelement 22 bilden, die aufeinander stapelbar und fest, jedoch lösbar, miteinander verbindbar sind. Der Staubsauger 90 bzw. das untere Stapelelement 21 bildet eine Stapelbasis 24.

Es ist ohne weiteres möglich, das Stapelelement 22 beispielsweise oben auf die Stapelelemente 12 oder 13 oder auch die Stapelbasis 14 aufzusetzen oder umgekehrt die beiden Stapelelemente 12 oder 13 auf die andere Stapelbasis 24, also den Staubsauger 90, aufzustapeln.

Die Stapelelemente 11, 12 sind jeweils als Transportbehälter 30 ausgestaltet. Ein Behälterkorpus 31 eines Transportbehälters 30 weist beispielsweise eine Bodenwand 32 auf, von der als Umfangsseitenwände 33 eine vordere Seitenwand 34, eine hintere Seitenwand 35 sowie zwischen diesen beiden Seitenwänden erstreckende Seitenwände 36 abstehen. Die Seitenwände 34, 35, 36 begrenzen eine Stauaufnahme 37, die sich zum Transportieren von beispielsweise Werkzeugen, Nägeln oder dergleichen eignet, insbesondere aber auch zum Transportieren einer Hand-Werkzeugmaschine 200, die in dem Stapelelement 12 angeordnet ist, oder einer Hand-Werkzeugmaschine 260, die im Stapelelement 13 angeordnet ist. Selbstverständlich könnte auch ein anderes Gerät derart transportiert werden, zum Beispiel eine Hand-Werkzeugmaschine 230, die in Figur 2 exemplarisch bei der Bearbeitung eines Werkstücks W dargestellt ist.

Das Stapelelement 22 wird von einem Transportbehälter 130 gebildet, dessen Behälterkorpus 131 eine oben offene Stauaufnahme 137 aufweist. Die Stauaufnahme 137 wird von einer Bodenwand 132 sowie Umfangsseitenwänden 133 begrenzt. Eine vordere und eine hintere Seitenwand 134, 135 sind durch schmalere Seitenwände 136 miteinander verbunden.

Man erkennt, dass die Außenumfangskontur der Behälterkorpusse 131 und 31 im Wesentlichen gleich sind, so dass der Transportbehälter 130 auf den Transportbehälter 30 oder auch auf jede der beiden Stapelbasen 14 oder 24 aufstapelbar ist.

Die Stauaufnahme 37 ist durch einen Deckel 40 verschließbar, der an der hinteren Seitenwand 35 mittels eines Schwenklagers 40a schwenkbar angelenkt ist. Der Deckel 40 weist eine Deckwand 41 auf, von der Umfangsseitenwänden 42 abstehen, deren Umfangskontur zu der Umfangskontur der Umfangsseitenwänden 33 des Behälterkorpus 31 passt. Mithin können also die Stirnseiten der Umfangsseitenwänden 42, 33 direkt in Deckung miteinander gebracht werden. An dem Deckel 40 ist noch ein schwenkbarer Handgriff 43 vorgesehen, der in eine Nichtgebrauchsstellung verschwenkbar ist, in welcher er in eine Ausnehmung 44 eintaucht, während er in einer Gebrauchsstellung nach oben in der Art eines Tragehenkels vor den Deckel 40 bzw. die Deckwand 41 vorsteht.

Der Transportbehälter 130 hat ebenfalls einen Tragegriff, nämlich einen starren Handgriff 143, der nach oben vor die Stauaufnahme 137 vorsteht. Der Handgriff 143 kann als Haltekontur in eine Henkelaufnahme 144 eines auf den Transportbehälter 130 aufgestapelten Transportbehälters eingreifen, welcher in Bezug auf die Henkelaufnahme 144 gleichartig ist. Mithin können also mehrere Transportbehälter 130 formschlüssig aufeinander aufgestapelt werden.

An der Ausnehmung 44 des Deckels 40 befindet sich noch eine Hintergreifkontur 45, die von in der Zeichnung meist nicht sichtbaren, hakenförmigen Füßen 45a an den Bodenwänden 32, 132 hintergriffen werden kann. Mithin können also diese Füße 45a sich sozusagen mit der Hintergreifkontur 45 verhaken, so dass im rückwärtigen Bereich eines jeweiligen Transportbehälters 30 ein Formschluss bezüglich einer Stapelrichtung S erreicht ist und die Transportbehälter 30 in ihrem hinteren Bereich zugfest bezüglich der Stapelrichtung S miteinander verbunden sind.

Der Formschluss der Hintergreifkontur 45 wirkt zweckmäßigerweise auch quer zur Stapelrichtung S, zumindest in einer Richtung. Weiterhin können quer zur Stapelrichtung S auch den Unterseiten der Stapelelemente angeordnete Füße 45b in Vertiefungen 45c an den Oberseiten der Stapelelemente, beispielsweise deren Deckel 40, eingreifen, sodass eine Scherfestigkeit oder Verschiebefestigkeit quer zur Stapelrichtung S auch dadurch realisiert ist. Beispielsweise werden die Stapelelemente 11-13 zunächst quer zur Stapelrichtung S anhand der hakenförmigen Füße 45a in die Hintergreifkonturen 45 eingehakt und dann nach unten geschwenkt, so dass die Bodenwänden 32, 132 auf der Oberseite des jeweils untergestapelten Stapelelements aufliegen, wobei Füße 45b in die Vertiefungen 45c eingreifen.

Die Füße 45b und die Vertiefungen 45c sollen als Formschlussvorsprünge und Formschluss-Vertiefungen verstanden werden, die quer zur Stapelrichtung S einen formschlüssigen Halt aufeinandergestapelter Stapelelemente realisieren. An dieser Stelle sei bemerkt, dass die hakenförmige Kontur der Füße 45b eine optionale Variante darstellt, die einen Halt der Stapelelemente in Bezug auf die Stapelrichtung S auf Zug zusätzlich realisiert. Es wäre ohne weiteres möglich, dass nur in Stapelrichtung oder Steckrichtung verlaufende Formschlusskonturen zwischen den Stapelelementen einer erfindungsgemäßen Stapelanordnung vorhanden sind, die somit einen formschlüssigen Halt quer zur Stapelrichtung realisieren, jedoch nicht einen zugfesten Halt entlang der Stapelrichtung.

Die zugfeste Verbindung eines Transportbehälters 130 mit einem weiteren Transportbehälter 130 oder eines Transportbehälters 130 mit einem darunter angeordneten Transportbehälter 30 wird im vorderen Bereich, also im Bereich der vorderen Seitenwand 34 oder Frontwand, durch ein anhand eines Drehlagers 47 schwenkbar am jeweiligen Deckel 40 angelenktes Koppelelement oder Riegelelement 46 ermöglicht. Das Riegelelement 46 kann durch eine Verdrehung um die Drehachse des Drehlagers 47 in Eingriff oder außer Eingriff mit Widerlagerkonturen 48 am unteren Bereich der vorderen Seitenwand 34, 134 eines jeweiligen Transportbehälters 30, 130 gebracht werden und koppelt auf diese Weise in Bezug auf die Stapelrichtung S die jeweiligen Transportbehälter 30, 30 oder 30, 130 zugfest. Am oberen Bereich einer jeweiligen vorderen Seitenwand 34 sind zweckmäßigerweise weitere Widerlagerkonturen 48 vorgesehen, die das Riegelelement 46 in seiner Koppelstellung oder Verriegelungsstellung ebenfalls formschlüssig umgreift oder hintergreift, so dass das Riegelelement 46 sozusagen den Deckel 40 überbrückend die Widerlagerkonturen 48, 49 miteinander verbindet.

Die Widerlagerkonturen 48, 49 sind ebenso wie Widerlagerkonturen 50, 52, die an den Seitenwänden 34, 134, 36, 136 vorgesehen sind, in der Art von Formschluss-Vorsprüngen oder Widerlagernocken ausgestaltet. Die Widerlagerkonturen 50 der Transportbehälter 30, 130 dienen zur Herstellung von Verbindungen mit beispielsweise Laschen 51, die an der Stapelbasis 24, dem Staubsauger 90, vorgesehen sind.

Die Laschen 51 befinden sich an einem Randbereich einer Behälter-Aufnahme 91 an der Oberseite eines Gehäuses 98 des Staubsaugers 90.

Weiterhin sind an der Behälteraufnahme-Aufnahme 91 Hintergreifkonturen oder Steckaufnahmen 92 vorgesehen, in welche die an den vorderen Seitenwänden 34, 134 der Transportbehälter 30, 130 angeordnete Widerlagerkonturen 52 quer zu der Stapelrichtung S eingreifen können. Die Widerlagerkonturen 52 eignen sich ferner zur Befestigung von in der Zeichnung nicht dargestellten Laschen in der Art der Laschen 51. Mithin wird also beispielsweise der Transportbehälter 30 oder 130 stirnseitig in die Steckaufnahmen 92 eingesteckt und anschließend mit dem Laschen 51 zugfest bezüglich der Stapelrichtung S gekoppelt.

An dem Transportbehälter 130 sind noch weitere Widerlagerkonturen 53 vorgesehen sowie Laschen 54, nämlich etwa quermittig an der jeweiligen Seitenwand 136. Wenn also der Handgriff 143 in die Henkelaufnahme 144 eines oberhalb des Transportbehälters 130 angeordneten weiteren Transportbehälters in der Art des Transportbehälters 130 eingreift, können die Laschen 54 des unteren Transportbehälters 130 mit den Widerlagervorsprüngen oder Widerlagerkonturen 53 des oberen Transportbehälters in Eingriff gebracht werden, beispielsweise von der Seite her eingeschwenkt und verhakt werden.

Der Staubsauger 90 weist an der Unterseite seines Gehäuses 98 Rollen 93 zum Fahren auf einem Untergrund auf. Über ein Netzkabel 94 ist der Staubsauger 90 mit Strom versorgbar. Alternativ wäre auch ein mit einem Akku oder einem sonstigen Energiespeicher betreibbarer Staubsauger 90 ohne weiteres denkbar. Über das Netzkabel 94 kann beispielsweise ein in der Zeichnung nicht dargestelltes Saugaggregat des Staubsaugers 90 mit elektrischer Energie versorgt werden. Ferner führt das Netzkabel 94 zu einer Stromversorgungseinrichtung 95, die eine Stromwandlung leistet. Beispielsweise versorgt die Stromversorgungseinrichtung 95 ein Display 96 und/oder eine Steuerung 99 des Staubsaugers 90. Es ist weiterhin zweckmäßig, wenn die Stromversorgungseinrichtung 95 beispielsweise eine Kopplungseinrichtung 97 mit elektrischer Energie versorgt, z.B. mit einer Gleichspannung mit 5-18 V (die Netzspannung über das Netzkabel 94 ist in der Regel zwischen 120 V und 230 V Wechselstrom).

Der Staubsauger 90 bildet, wie erwähnt, eine Stapelbasis 24. Dementsprechend sind die Stromversorgungseinrichtung 95 und die Kopplungseinrichtung 97 auch für die auf die Stapelbasis 24 aufgestapelten Stapelelemente nutzbar, zum Beispiel das Stapelelement 21, alternativ aber auch für die anderen Stapelelemente 12, 13, was später noch deutlich wird. Zunächst sei noch kurz auf die Stapelbasis 24 eingegangen, die beispielsweise als eine Tragplatte ausgestaltet ist. Die Stapelbasis 14 könnte aber auch ohne weiteres als ein Regalboden dienen oder an einem Regalboden angeordnet sein.

Die Stapelbasis 24, die beispielsweise plattenartig ist oder einem plattenförmigen Grundkörper aufweist, weist beispielsweise eine Stromversorgungseinrichtung 195 auf, die über ein Netzkabel 194 an ein Stromversorgungsnetz mit einer Wechselspannung oder Gleichspannung, beispielsweise 230 V oder 120 V, anschließbar ist. Die Stapelbasis 24 weist eine Kopplungseinrichtung 197 auf, die eine Datenübertragung von und/oder zu der Stapelbasis 14 ermöglicht sowie auch über eine nachfolgend noch näher beschriebenen Busverbindung 60 und/oder eine Busverbindung 160 mit der Stapelbasis 14.

Die Busverbindung 160 ist eine drahtlose Busverbindung, während die Busverbindung 60 leitungsgebunden bzw. über Kontakte realisiert ist.

Die Busverbindung 60 ist über Busschnittstellen 61, 62 der Stapelanordnung 10 realisiert. Die Stapelbasis 14 hat an ihrer Oberseite, die zum Abstellen eines jeweiligen Stapelelements 12, 13, 22 geeignet ist, beispielsweise Buskontakte 63, beispielsweise ortsfest und unbeweglich an einer Oberfläche der Oberseite der Stapelbasis 14 angeordnete Kontaktflächen oder besonders bevorzugt bewegliche Kontaktflächen 65, insbesondere angefederte Kontaktflächen, so dass jedenfalls ein sicherer Kontakt zu Buskontakten 64 der korrespondierenden Busschnittstelle 62 an der Unterseite eines jeweiligen Stapelelements 12, 13, 22 herstellbar ist. Selbstverständlich können auch Kontaktflächen 66 der Buskontakte 64 unbeweglich oder angefedert sein oder als Kontaktstifte ausgestaltet sein.

Angedeutet ist eine Ausführung von Buskontakten als Steckverbinder an der Schnittstelle zwischen den Stapelelementen 12, 13. Dort sind beispielsweise Steckverbinder 67 in Steckbuchsen 68 des jeweils anderen Stapelelements 12 oder 13 eingesteckt. Eine Steck Richtung der Steckverbinder 67 und der Steckbuchsen 68 verläuft Vorzugsweise parallel zur Stapelrichtung S, so dass allein schon durch das Aufstapeln der Stapelelemente 12, 13 aufeinander die Busverbindung 60 realisiert ist.

Bevorzugt ist die Anordnung so getroffen, dass die Steckverbinder 67 beispielsweise beweglich gelagert sind, so dass sie bei Nichtgebrauch in eine Nichtgebrauchsstellung verschwenkbar oder verschiebbar sind, wo sie nicht vor eine Außenoberfläche eines jeweiligen Transportbehälters 30 vorstehen. Es ist aber auch denkbar, dass die Steckverbindung an einem geschützten, beispielsweise durch eine Vertiefung realisierten, Bereich vorgesehen ist, so dass gegebenenfalls vorstehende Steckkontakte mechanisch vor Beschädigungen geschützt sind.

Weiterhin ist es möglich, dass beispielsweise zwischen einem jeweiligen Deckel 40 und dem Behälterkorpus 31 eine lösbare Kontaktverbindung mit beispielsweise Kontaktflächen 69 möglich ist, wobei an dieser Stelle bemerkt sei, dass selbstverständlich auch beispielsweise ein flexibles Kabel zwischen einerseits dem Behälterkorpus 31 und andererseits dem Deckel 40 eine zuverlässige Busverbindung 60 ermöglichen würde.

Auch die Riegelelemente 46 eignen sich zur Herstellung de Busverbindung 60. Beispielsweise können an den Riegelelementen 46 Kontakte 76 und an den Widerlagerkonturen 48, 49 Buskontakte 63b und 64b vorgesehen sein, die in der Verriegelungsstellung des Riegelelementes 46 miteinander verbunden sind. Die Kontakte 76 sind über mindestens eine Leitung 75 miteinander verbunden.

Die Busverbindung 60 umfasst Busleitungen 70, die beispielsweise in den Deckel 40 und den jeweiligen Behälterkorpussen 31 verlaufen. Die Busverbindung 60, die man auch als Bus bezeichnen kann, hat weiterhin Anschlusskontakte 71, die eine Einspeiseschnittstelle 72 sowie eine Kommunikationsschnittstelle 73 der Busverbindung 60 darstellen. Mithin kann also an die Anschlusskontakte 71 beispielsweise ein nicht näher ausgeführter Computer 300 über ein entsprechendes Anschlusskabel an die Anschlusskontakte 71 angeschlossen werden und individuell über die Busleitungen 70 kommunizieren bzw. Energie übertragen oder beides.

Beispielsweise sind Busleitungen 70a zu einer elektrischen Energieversorgung über die Busverbindung 60 vorgesehen. Die Busleitungen 70 könnten direkt von der Stromversorgungseinrichtung 95 mit elektrischer Energie, beispielsweise einer Wechselstrom-Stromversorgung oder dergleichen, versorgt werden. Auch eine Gleichspannung mit relativ hoher Stromstärke ist über die Busleitungen 70a vorteilhaft. Es ist ferner möglich, über die Einspeiseschnittstelle 72 elektrische Energie in die Busleitungen 70a einzuspeisen.

Vorliegend ist eine Bereitstellungseinrichtung 74 vorgesehen, die beispielsweise aus der über das Netzkabel 194 bezogene Netzspannung, die durch die Stromversorgungseinrichtung 95 beispielsweise geglättet ist oder bereits in ihrer Spannung gewandelt, in eine Gleichspannung mit relativ niedriger Voltzahl, beispielsweise 12V oder 24 V, umwandelt.

Die Stapelbasis 14 könnte auch einen fest montierten oder auswechselbaren Energiespeicher 174 an Bord haben, der z.B. die Bereitstellungseinrichtung 74 oder die Busleitungen 70a direkt mit elektrischer Energie versorgt. Der Energiespeicher 174 kann ein elektrischer Akku oder auch ein Pufferakku sein.

Die Busleitungen 70b sind zu einer Datenkommunikation mit den Stapelelementen 12, 13 vorgesehen, wobei hier beispielsweise ein Feldbus oder dergleichen zweckmäßig ist. Mithin ist also eine serielle Datenübertragung über die Busleitungen 70b bevorzugt, wobei dies nicht zwingend ist, da selbstverständlich auch eine parallele Ankopplung und Datenübertragung über weitere, nicht dargestellte Busleitungen 70 möglich wäre.

Der drahtlos kommunizierende Bus oder die Busverbindung 160 umfasst beispielsweise eine Kopplungseinrichtung 197, mit der eine drahtlose Kommunikation beispielsweise mit einem Smartphone oder einer sonstigen mobilen Kommunikationseinrichtung 400 möglich ist. Die Kommunikationseinrichtung 400 weist beispielsweise Eingabemittel 401, beispielsweise einen Touchscreen oder eine Tastatur, Anzeigemittel 402 zur Ausgabe von Daten, insbesondere für eine grafische Bedienoberfläche, sowie einen Prozessor 403 auf. Weiterhin ist an Bord der Kommunikationseinrichtung 400 eine Drahtlos-Schnittstelle 405 vorgesehen, die eine drahtlose Kommunikation mit einer Drahtlos-Schnittstelle 198 der Kopplungseinrichtung 197 ermöglicht. An den Anzeigemitteln 402 können beispielsweise die Hand-Werkzeugmaschinen 200, 230, 260 und/oder Daten derselben grafisch angezeigt werden.

Die Busverbindung 160 umfasst die Kopplungseinrichtung 197 sozusagen als Buskopf sowie Buskoppler 190, die Bestandteile der Transportbehälter 30 sind. Die Buskoppler 190 sind beispielsweise in der jeweiligen Stauaufnahme 37, insbesondere an deren Randbereich angeordnet. Sie können auch in einem Abschnitt der Umfangsseitenwände 33 angeordnet sein. Selbstverständlich kann auch bei dem Transportbehälter 130 in nicht dargestellter Weise in eine der Umfangsseitenwände 133 ebenfalls mindestens ein Buskoppler 190 eingebaut oder integriert sein.

Die Buskoppler 190 sind zu einer drahtlosen Datenübertragung und/oder Energieübertragung zwischen Stapelelementen ausgestaltet. Die Buskoppler 190 sind vorzugsweise als Transmitter ausgestaltet, können also Daten und/oder Energie vom einen Stapelelement zum nächsten übertragen. Es ist auch möglich, dass ein Buskoppler 190 sozusagen die erste oder letzte Station eines Busses ist, also sozusagen ein Buskopf ist.

Man erkennt allein schon aus der schematischen Darstellung der Zeichnung, dass die Buskoppler 190 zweckmäßigerweise bezüglich der Stapelrichtung S oder einer Stapelachse miteinander fluchten. Dadurch ist der Übertragungsweg für die drahtlose Übertragung, beispielsweise eine induktive Übertragung oder eine Funkübertragung, besonders günstig. Beispielsweise sind Übertraaunassoulen von Buskopplern 190, die in unmittelbar benachbarten Stapelelementen, die aufeinander gestapelt sind, miteinander fluchtend oder einander überdeckend angeordnet. Beispielsweise sind in aufeinandergestapelten, benachbarten Stapelelementen, beispielsweise den Stapelelementen 12, 13, angeordnete zur drahtlosen Kommunikation oder Datenübertragung oder Energieübertragung vorgesehene Koppelmittel 191, 192, zum Beispiel Antennen, elektrische Spulen oder dergleichen, unmittelbar benachbart und miteinander fluchtend vorgesehen. Dies ermöglicht einen optimalen Wirkungsgrad beispielsweise bei einer Energieübertragung oder verbessert die Datensicherheit oder Datenqualität bei einer Datenübertragung. Selbstverständlich ist eine örtlich nahe und/oder fluchtende Anordnung von Koppelmitteln auch an anderer Stelle der Stapelanordnung 10 vorteilhaft, beispielsweise zwischen der Stapelbasis 14 und dem Stapelelement 12.

Die Kopplungseinrichtung 197 umfasst beispielsweise eine zentrale Bussteuerung 196, die Drahtlos-Schnittstelle 198 zur Kommunikation mit der Kommunikationseinrichtung 400 und eine Drahtlos-Schnittstelle 193 zur Kommunikation mit den Buskopplern 190. Die Drahtlos-Schnittstelle 193, 198 können zwar gleichartige Busse bedienen, beispielsweise Bluetooth-Busse. Es ist aber vorteilhaft, wenn beispielsweise für die interne Kommunikation auf der Busverbindung 160 ein erstes Daten- oder Busprotokoll verwendet wird, zum Beispiel Bluetooth, während die Kommunikation mit der Kommunikationseinrichtung 400 über ein zweites Daten- oder Busprotokoll, zum Beispiel ein WLAN (Wireless LAN), erfolgt.

Die Buskoppler 190 können weiterhin zur Kommunikation über den Bus oder die Busverbindung 160 das vorgenannte erste Daten- oder Busprotokoll verwenden, während sie zur Kommunikation mit beispielsweise einer der Hand-Werkzeugmaschinen 200, 230, 260 ein weiteres, anderes Daten- oder Busprotokoll verwenden, zum Beispiel ein proprietäres Daten- oder Busprotokoll, das besonderen Sicherheitsanforderungen genügt.

Die Buskoppler 190 können oder mindestens ein Buskoppler 190 kann auch drahtlose Energieübertrager umfassen, z.B. induktive Übertrager, um die Transportbehälter 30 und/oder die darin angeordneten Hand-Werkzeugmaschinen mit elektrischer Energie zu versorgen.

Mindestens ein Buskoppler 190 kann eine Maschinenschnittstelle enthalten oder aufweisen, um direkt mit beispielsweise einer der Handwerkzeugmaschinen 200, 230, 260 zu kommunizieren und/oder deren Energiespeicher aufzuladen. Die Maschinenschnittstelle kann beispielsweise elektrische Kontakte zur elektrischen Verbindung mit einer Serviceschnittstelle einer jeweiligen Werkzeugmaschine 200, 230, 260 aufweisen. Es ist aber auch möglich, dass mindestens ein Buskoppler 190 eine Maschinenschnittstelle zur drahtlosen Kommunikation mit einer Serviceschnittstelle einer jeweiligen Werkzeugmaschine 200, 230, 260 aufweist.

Es ist weiterhin möglich, dass mindestens ein Buskoppler 190 mit einer derartigen Maschinenschnittstelle verbunden ist, sie aber nicht selbst integral aufweist.

Anhand der Transportbehälter 30, 130 und den Busverbindungen 60, 160 können beispielsweise Betriebsdaten der Hand-Werkzeugmaschinen 200, 230, 260 ausgelesen werden, neue Parameter geladen werden und/oder, was besonders vorteilhaft ist, Energiespeicher der Hand-Werkzeugmaschinen 200, 230, 260 aufgeladen werden.

Die Transportbehälter 30 sind dazu besonders vorteilhaft ausgestaltet. In den Transportbehälter 30 sind fest oder lösbar Behältereinsätze 80, 180 aufgenommen, deren Außenumfangskontur 81 optimal in eine Innenumfangskontur 55 der Stauaufnahme 37 passt. Die Stauaufnahme 37 ist beispielsweise im Querschnitt etwa rechteckig. Die Außenumfangskontur 81 passt dazu in optimaler Weise in die Innenumfangskontur 55 hinein, so dass sich die Behältereinsätze 80, 180 an den Umfangsseitenwänden 33 abstützen. Die Behältereinsätze 80, 180 können also einfach in die jeweilige Stauaufnahme 37 von oben her eingesteckt werden.

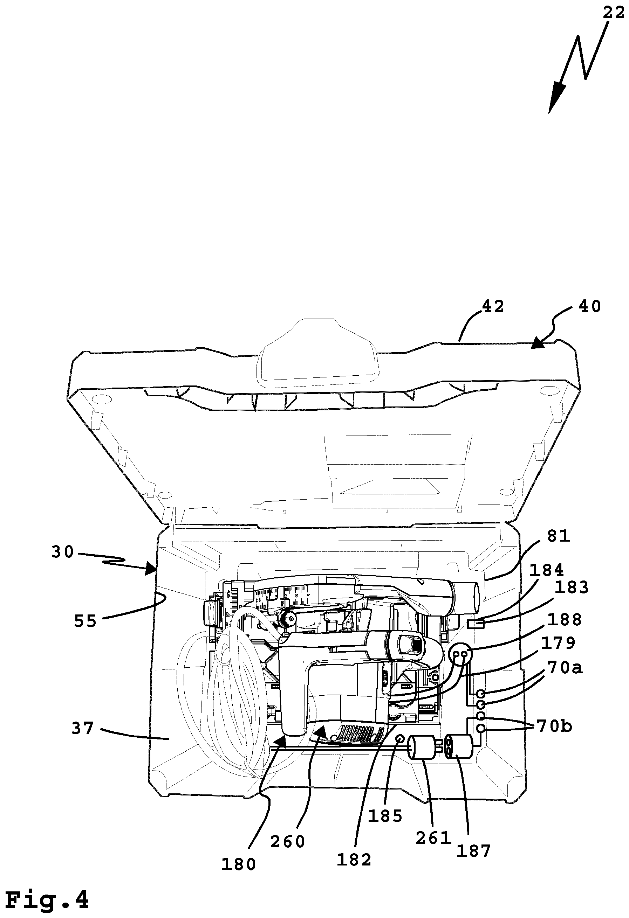

Alternativ oder ergänzend zu diesem Formschluss ist z.B. eine Verschraubung und/oder Verrastung und/oder Verriegelung eines Behältereinsatzes 80, 180 in der jeweiligen Stauaufnahme 37 denkbar, z.B. anhand eines Riegels oder einer angefederten Raste 183 (Figur 4), die ein Befestigungsmittel 184 bildet. Mindestens Riegel oder eine Raste, z.B. die Raste 183, steht z.B. von einer Umfangsseitenwände 133 nach innen in die Stauaufnahme 37 ab. Es ist auch möglich, dass ein Behältereinsatz 80, 180 in der Stauaufnahme 37 durch mindestens eine Schraube gesichert ist, z.B. eine Schraube 185, die den Behältereinsatz 80, 180 durchdringt und in die Bodenwand 32 oder einen Schraubdom derselben eingeschraubt ist.

Es versteht sich, dass innerhalb einer der Stauaufnahmen 37 beispielsweise auch noch Stützwände oder dergleichen vorgesehen sein können, die einen jeweiligen Behältereinsatz 80, 180 ortsfest festlegen.

An dem Behältereinsatz 80 ist beispielsweise eine Maschinenaufnahme 82 zur Aufnahme der Hand-Werkzeugmaschine 200 vorgesehen. Die Maschinenaufnahme 82 nimmt die Hand-Werkzeugmaschine 200 formschlüssig auf. Beim anderen Behältereinsatz 180 hat deren Maschinenaufnahme 182 eine zu der Hand-Werkzeugmaschine 260 passende Innenkontur, so dass auch diese formschlüssig gehalten werden kann. An den Behältereinsätzen 80, 180 können auch selbstverständlich noch andere Halterungen oder Aufnahmen vorgesehen sein, so zum Beispiel für einen Reserve-Energiespeicher 203 der Hand-Werkzeugmaschine 200, der anders als ein weiterer Energiespeicher 202 nicht an dem Gehäuse 201 der Hand-Werkzeugmaschine 200 befestigt ist, sondern abseits davon in dem Behältereinsatz 80 aufgenommen ist.

Zum Aufladen der Energiespeicher 203, 202 dient eine Ladestation 87, die beispielsweise an den leitungsgebundenen Bus 60 direkt angekoppelt ist, insbesondere an die Busleitungen 70b, oder drahtlos, z.B. induktiv, an den Bus 160. Beispielsweise kann ein Buskoppler 190 mit der Ladestation 87 kommunizieren.

Eine Variante eines Transportbehälters 30, die nicht dargestellt ist, kann im Prinzip vorsehen, dass der Behältereinsatz 80 ortsfest in der Stauaufnahme 37 angeordnet ist, insbesondere sogar einen integralen Bestandteil des Transportbehälters bildet.

Zweckmäßigerweise ist jedoch vorgesehen, dass der Behältereinsatz 80 aus der Stauaufnahme 37 entfernbar ist, also lösbar in dieser aufgenommen ist, so dass auch eine dauerhafte Verbindung mit den Busleitungen 70 wenig zweckmäßig ist. Zu diesem Zweck sind an dem Behälterkorpus 31 des Transportbehälters 30 Kontakte 83 vorgesehen, die Bestandteile einer Einsatzschnittstelle 84 bilden. Mit den Kontakten 83 treten Kontakte 85 einer Korpusschnittstelle 86 des Behältereinsatzes 80 in Verbindung, wenn dieser in die Stauaufnahme 37 eingesteckt ist. Dann ist eine elektrische Verbindung zwischen einerseits der Busschnittstelle 61, 62 und andererseits dem der Behältereinsatz 80 hergestellt. Die Kontakte 83, 85 sind elektrische Kontakte und beispielsweise angefedert und/oder als Steckverbinder (Buchse und Stecker) ausgestaltet. In der Zeichnung sind die Kontakte 83, 85 übereinander angeordnet, so dass man deren Lösbarkeit nicht ohne weiteres erkennen kann.

Eine Steckachse der Kontakte 83, 85, wenn sie als Steckverbinder ausgestaltet sind, verläuft z.B. parallel zur Steckrichtung, in welcher der Behältereinsatz 80 in die Stauaufnahme 37 von deren oberen Öffnung eingesteckt wird, vorliegend also in der Stapelrichtung S. Die Steckachse könnte auch anders orientiert sein, z.B. wenn einer der Steckverbinder an einer flexiblen Leitung angeordnet ist

Die Busleitungen 70a versorgen also die Ladestation 87 mit elektrischer Energie, welche ihrerseits wiederum dann die beiden Energiespeicher 202, 203, z.B. Akkupacks, aufladen kann.

Die Busleitungen 70b, die Datenleitungen, sind beispielsweise mit einer Drahtlos-Kommunikationsschnittstelle 88 des Behältereinsatzes 80 verbunden. Selbstverständlich wäre auch eine drahtlose Kommunikation direkt mit der Drahtlos-Kommunikationsschnittstelle 88 möglich, nämlich über den anderen Bus 160. Jedenfalls ist es möglich, dass beispielsweise die Kommunikationseinrichtung 400 und/oder der Computer 300 über eine oder beide der Busverbindungen 60, 160 und schließlich die Kommunikationsschnittstelle 88, die einen Bestandteil einer Maschinenschnittstelle 89 bilden, mit einer Serviceschnittstelle 205 der Hand-Werkzeugmaschine 200 zu kommunizieren. Somit können beispielsweise an der Kommunikationseinrichtung 400 Betriebsparameter der Hand-Werkzeugmaschine 200 ausgelesen werden oder diese auch vorgegeben werden. Auch Serviceintervalle oder dergleichen können ohne weiteres auf diesem Wege überprüft werden.

Die Drahtlos-Kommunikationsschnittstelle 88 eignet sich auch zur Identifizierung und/oder Ortung der Hand-Werkzeugmaschine 200, bildet also auch eine Identifizierungs- und Ortungseinrichtung.

Ein Ventilator, der z.B. über die Busleitungen 70a mit elektrischer Energie versorgbar ist, bildet eine Kühleinrichtung für die Hand-Werkzeugmaschine 200 und/oder die Energiespeicher 202, 203.

Der Behältereinsatz 180 ist im Gegensatz zu dem Behältereinsatz 80 für eine leitungsgebundene Kommunikation mit der Hand-Werkzeugmaschine 260 ausgelegt. Beispielsweise sind die Busleitungen 70a über nicht dargestellte Kontakte einer Korpusschnittstelle 86 des Behälterkorpus 31 und einer Einsatzschnittstelle 84 des Behältereinsatzes 180 mit einer Steckdose 187 verbunden, in die ein Netzstecker 261 der Hand-Werkzeugmaschine 260 einsteckbar ist.

Die Busleitungen 70b sind beispielsweise über ebenfalls nicht sichtbare Kontakte der Korpusschnittstelle 186 und der Einsatzschnittstelle 84 des Behältereinsatzes 180 lösbar miteinander verbindbar und jedenfalls in eine elektrische Verbindung zu bringen. Eine Kommunikationsschnittstelle 188, die mit den Busleitungen 70b auf diesem Wege verbunden ist, ist beispielsweise über Kabel 179 mit einer Serviceschnittstelle einer Steuerung, einem Speicher oder dergleichen der Hand-Werkzeugmaschine 260 verbunden.

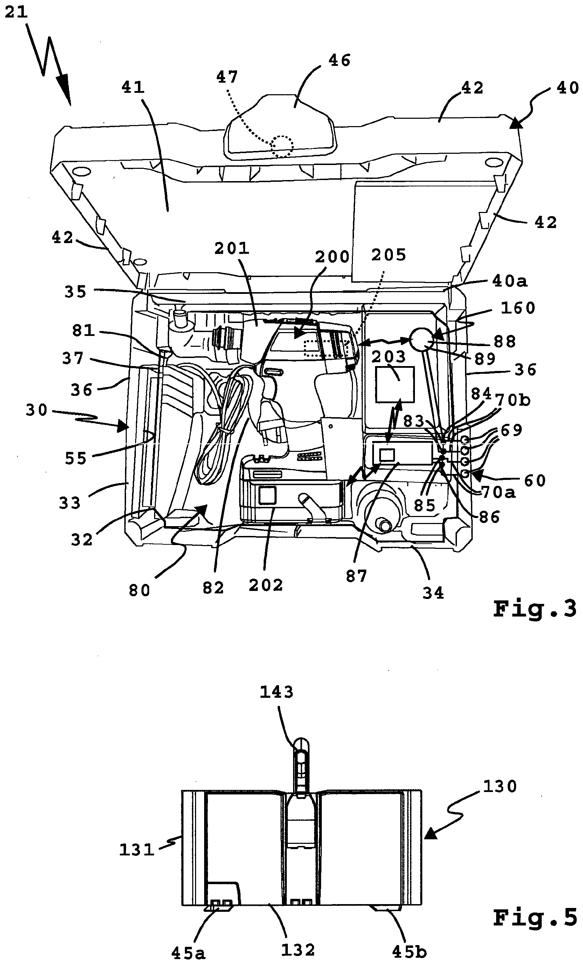

Es wäre auch möglich, dass der Behältereinsatz 180 die Kontakte 85 der Korpusschnittstelle 86 aufweist, so dass er mit den Kontakten 83 der Einsatzschnittstelle 84 des Transportbehälters 30 aus Figur 3 verbunden werden kann.

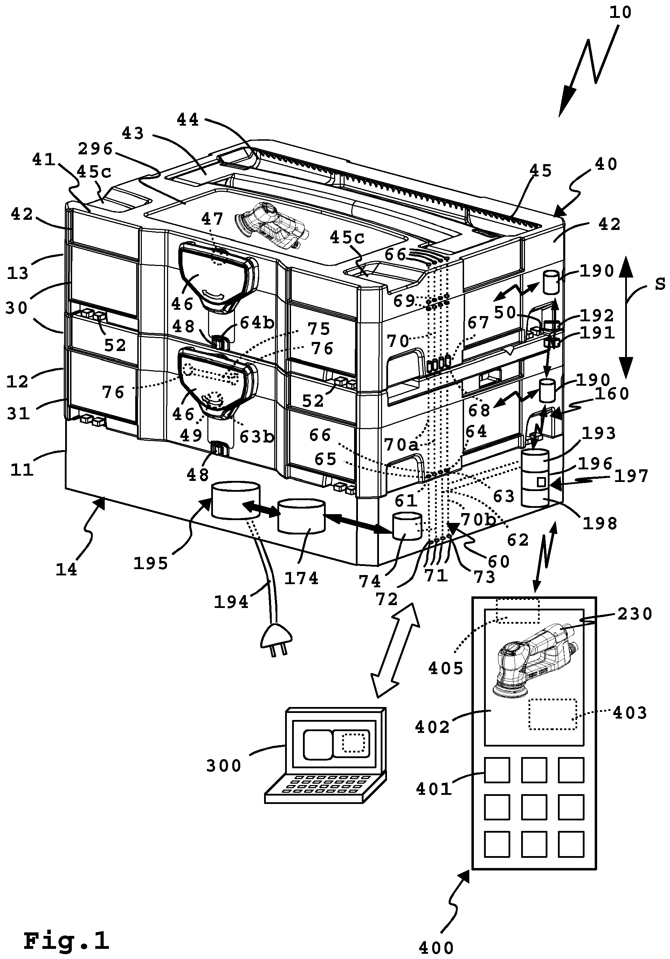

Die komfortable Bedienung wird beispielsweise im Zusammenhang mit Figur 1 noch etwas deutlicher, das heißt dass beispielsweise zentral an der Kommunikationseinrichtung 400 Betriebsparameter sämtlicher in der Stapelanordnung 10 aufbewahrte Hand-Werkzeugmaschinen, exemplarisch ist die Hand-Werkzeugmaschine 230 dargestellt, auslesbar, parametrierbar oder dergleichen sind.

Am Transportbehälter 130 ist eine Maschinenschnittstelle 289 in Gestalt einer Ladestation 287 und/oder einer zu einer Datenübertragung von und/oder zu einer Hand-Werkzeugmaschine ausgestalteten Kommunikationsschnittstelle 188 vorgesehen. Die Maschinenschnittstelle 289 ermöglicht vorzugsweise eine drahtlose Kommunikation einer Hand-Werkzeugmaschine, z.B. der Hand-Werkzeugmaschine 230. Wenn diese in der Stauaufnahme 137 liegt, kann sie beispielsweise über die Maschinenschnittstelle 289 mit elektrischer Energie versorgt werden, z.B. zum Aufladen eines Energiespeichers/Akkus.

Die Maschinenschnittstelle 289 ist über einen Bus 360 mit der Stapelbasis 24 bzw. dem Staubsauger 90 verbindbar. Eine Steckaufnahmen 92 und die zugeordneten Widerlagerkonturen 52 des Transportbehälters 130 haben z.B. elektrische Buskontakte 163, 164, bilden also Busschnittstellen, die beim Einsetzen des Transportbehälters 130 in die Behälter-Aufnahme 91 in Kontakt gelangen, so dass die Maschinenschnittstelle 289 mit der Stromversorgungseinrichtung 95, z.B. zur Energieversorgung der Hand-Werkzeugmaschine 230, und der Kopplungseinrichtung 97 verbunden ist.

Es ist auch möglich, dass die Laschen 51 und die zugeordneten Widerlagerkonturen 50 Buskontakte haben, die zur Herstellung einer Busverbindung zwischen Stapelelementen geeignet sind.

Die Kopplungseinrichtung 97 ermöglicht über die Busverbindung 160 beispielsweise die Kommunikation zwischen der Kommunikationseinrichtung 400 oder dem Computer 300 und der Hand-Werkzeugmaschine 230.

Eine Stapelbasis oder ein Stapelelemente einer Stapelanordnung, die über eine Busverbindung mit mindestens einem weiteren Stapelelement verbunden ist, kann auch eine an die Busverbindung ankoppelbare Bedienschnittstelle aufweisen. Beispielsweise kann das Display 96 des Staubsaugers 90 zur Anzeige von über den Bus 160 empfangenen Daten vorgesehen sein. Es ist auch möglich, dass an dem Display 96 Daten oder Abfragen eingebbar sind, z.B. dass das Display 96 eine grafische Bedienoberfläche für ein an den Bus 360 angekoppeltes Element, z.B. die Hand-Werkzeugmaschine 230 und/oder den Staubsauger bereitstellt. Das Display 96 bildet also eine Bedieneinrichtung 199.

Eine Bedieneinrichtung kann auch an einem anderen Stapelelement als der Stapelbasis vorgesehen sein. Beispielsweise hat das Stapelelement 22 ein Display 296, z.B. an seinem Deckel. Das Display 296 ist z.B. mit der Maschinenschnittstelle 89 oder 189 verbunden, so dass beispielsweise ein Bilder und/oder Betriebsdaten der Hand-Werkzeugmaschinen 200, 230 oder 260 an dem Display 296 anzeigbar sind.

Die Kopplungseinrichtung 97 und die Stromversorgungseinrichtung 95 sind zweckmäßigerweise auch mit den Buskontakten 63 verbunden, die eine Kompatibilität zu dem Bus 60 ermöglichen. Die Stapelbasis 24 oder der Staubsauger 90 hat also auch eine Busschnittstelle 61.

## Patentansprüche

1. Stapelanordnung (10; 20) mit mindestens zwei in einer Stapelrichtung (S) aufeinander stapelbaren Stapelelementen (11-13; 21, 22), von denen zumindest eines von einem Transportbehälter (30; 130) gebildet ist, der einen Behälterkorpus (31; 131) mit einer Stauaufnahme (37; 137) aufweist, die eine Maschinenaufnahme (82; 182) für eine elektrische oder pneumatische Hand-Werkzeugmaschine (200; 230; 260) aufweist, wobei die Stapelelemente (11-13; 21, 22) zur Übertragung von Daten und/oder Energie zwischen den Stapelelementen (11-13; 21, 22) der Stapelanordnung (10; 20) Busschnittstellen (61, 62) aufweisen, wobei die Busschnittstellen (61, 62) beim Aufeinanderstapeln der Stapelelemente (11-13; 21, 22) oder im aufeinandergestapelten Zustand der Stapelelemente (11-13; 21, 22) eine Busverbindung (60; 160) zwischen den Stapelelementen (11-13; 21, 22) bilden, wobei die Busschnittstelle (61, 62) des Transportbehälters (30; 130) mit einer Maschinenschnittstelle (89; 189) zum Anschluss einer Serviceschnittstelle (205; 265) der Hand-Werkzeugmaschine (200; 230; 260) verbunden ist oder eine Maschinenschnittstelle (89; 189) aufweist, wobei die Maschinenschnittstelle (89; 189) zur Übertragung von Daten und/oder elektrischer Energie und/oder Druckluft vorgesehen ist, **dadurch gekennzeichnet, dass** die Maschinenschnittstelle (89; 189) eine Drahtlos-Übertragungsschnittstelle zur drahtlosen Übertragung von Daten und/oder Energie zu der Hand-Werkzeugmaschine (200; 230; 260) aufweist.

2. Stapelanordnung nach Anspruch 1, **dadurch gekennzeichnet, dass** mindestens ein Stapelelement (11-13; 21, 22) der Stapelanordnung (10; 20) miteinander verbundene Busschnittstellen (61, 62) aufweist, die zur Kommunikation mit einem untergestapelten und einem aufgestapelten Stapelelement (11-13; 21, 22) vorgesehen sind, so dass das in der Stapelanordnung (10; 20) angeordnete Stapelelement (11-13; 21, 22) die Busverbindung (60; 160) zwischen den oberen und unteren Stapelelementen (11-13; 21, 22) herstellt und/oder dass die Maschinenschnittstelle (89; 189) Anschlusskontakte zur Herstellung einer kontaktbehafteten Verbindung zu der Hand-Werkzeugmaschine (200; 230; 260) aufweist.

3. Stapelanordnung nach Anspruch 1 oder 2, **dadurch gekennzeichnet, dass** mindestens eine zwischen zwei Stapelelementen (11-13; 21, 22) vorgesehene Busschnittstelle (61, 62) eine für eine Datenübertragung und/oder Energieübertragung vorgesehene Drahtlos-Busschnittstelle (61, 62) oder eine ausschließlich für eine Datenübertragung oder Energieübertragung vorgesehene Drahtlos-Busschnittstelle (61, 62) umfasst.

4. Stapelanordnung nach einem der vorhergehenden Ansprüche, **dadurch gekennzeichnet, dass** die Busschnittstellen (61, 62), insbesondere zum drahtlosen Übertragung von Energie vorgesehene Drahtlos-Busschnittstellen, im aufeinandergestapelten Zustand der Stapelelemente (11-13; 21, 22) miteinander fluchtend positioniert sind und/oder dass drahtlos kommunizierende Koppelmittel (191, 192) aufeinander gestapelter Stapelelemente (11-13; 21,22) an einander unmittelbar gegenüberliegenden Wänden oder Wandbereichen der aufeinander gestapelten Stapelelemente (11-13; 21,22) angeordnet sind und/oder durch die Stapelelemente in Bezug auf die Stapelrichtung zugfest verbindende Koppelmittel und/oder quer zur Stapelrichtung formschlüssig ineinander greifende Formschlusskonturen der Stapelelemente in einer stabilen Relativposition zueinander gehalten sind.

5. Stapelanordnung nach einem der vorhergehenden Ansprüche, **dadurch gekennzeichnet, dass** die Busschnittstellen (61, 62) insbesondere an Steckverbindern (67) angeordnete elektrische Kontaktflächen an der Oberseite eines unteren Stapelelementes (11-13; 21, 22) und der Unterseite eines auf das Unterteil aufgestapelten oberen Stapelelementes (11-13; 21, 22) umfassen, die an der jeweiligen Oberseite und Unterseite so orientiert sind, dass sie die Busverbindung (60; 160) beim Aufstapeln der Stapelelemente (11-13; 21, 22) herstellen, und/oder dass eine Steckachse der Steckverbinder (67) parallel zu der Stapelrichtung (S) verläuft, so dass die Steckverbinder (67) durch Aufstapeln eines Stapelelements (11-13; 21, 22) auf ein anderes Stapelelement (11-13; 21, 22) ineinander steckbar sind.

6. Stapelanordnung nach einem der vorhergehenden Ansprüche, **dadurch gekennzeichnet, dass** die Busschnittstellen (61, 62) mindestens eine Lasche (51, 54) umfassen, die ein oberes Stapelelement (11-13; 21, 22) mit einem unteren Stapelelement (11-13; 21, 22) der Stapelanordnung (10; 20) verbindet und im montierten Zustand mit einem Seitenwandabschnitt des Behälterkorpus (31; 131) des oberen Stapelelementes (11-13; 21, 22), vorzugsweise auch mit einem Seitenwandabschnitt des Behälterkorpus (31; 131) des unteren Stapelelementes (11-13; 21, 22) verbunden ist.

7. Stapelanordnung nach Anspruch 6, **dadurch gekennzeichnet, dass** die mindestens eine Lasche (51, 54) an einem der Stapelelemente (11-13; 21, 22), insbesondere drehbar und/oder linear, beweglich gelagert ist oder Steckmittel zum Einstecken in mindestens eines der Stapelelemente (11-13; 21, 22) aufweist und/oder dass die mindestens eine Lasche (51, 54) ein insbesondere drehbar gelagertes Riegelelement (46) umfasst, das in einer Verriegelungsstellung zwei Stapelelemente (11-13; 21, 22) miteinander verriegelt und in einer Lösestellung die Stapelelemente (11-13; 21, 22) freigibt, wobei das Riegelelement (46) in der Verriegelungsstellung in elektrischem Kontakt mit Buskontakten (63; 64) der durch das Riegelelement (46) verbundenen Stapelelemente (11-13; 21, 22) ist und diese elektrisch verbindet und in der Lösestellung außer Kontakt mit den Buskontakten (63; 64) ist und/oder in der Verriegelungsstellung zur drahtlosen Datenübertragung oder Energieübertragung ausgestaltete Übertragungsmittel der Stapelelemente (11-13; 21, 22) relativ näher zueinander positioniert als in der Lösestellung.

8. Stapelanordnung nach einem der vorhergehenden Ansprüche, **dadurch gekennzeichnet, dass** mindestens ein Stapelelement (11-13; 21, 22) eine drahtlose oder leitungsgebundene Einspeiseschnittstelle (72), insbesondere einen Anschluss für ein elektrisches Energienetz, zum Einspeisen von elektrischer Energie und/oder Druckluft in die Busverbindung (60; 160) und/oder eine insbesondere einen Steckverbinder (67) aufweisende Kommunikationsschnittstelle (73) zum drahtlosen oder leitungsgebundenen Anschluss der Busverbindung (60; 160) an ein Kommunikationsnetz, insbesondere ein Local Area Network, und/oder zur Kommunikation mit einem Bediengerät aufweist, wobei zweckmäßigerweise vorgesehen ist, dass die Einspeiseschnittstelle (72) eine Bereitstellungseinrichtung (74), insbesondere einen Transformator, zum Bereitstellung einer für eine in der Stapelanordnung (10; 20) aufbewahrte elektrische Hand-Werkzeugmaschine (200; 230; 260) geeigneten Versorgungsspannung anhand der über die Einspeiseschnittstelle (72) eingespeisten elektrischen Energie oder Druckluft aufweist.

9. Stapelanordnung nach einem der vorhergehenden Ansprüche, **dadurch gekennzeichnet, dass** mindestens ein Stapelelement (11-13; 21, 22) der Stapelanordnung (10; 20) einen insbesondere auswechselbaren Energiespeicher (174) zur Bereitstellung insbesondere elektrischer Energie auf der Busverbindung (60, 160) und/oder eine Bedieneinrichtung (199) zur Bedienung, insbesondere zur Dateneingabe und/oder Datenausgabe, mindestens eines an die Busverbindung (60, 160) angeschlossenen Elements, insbesondere einer in einem Transportbehälter aufbewahrten Hand-Werkzeugmaschine aufweist, und/oder dass der mindestens eine Transportbehälter (30; 130) mindestens eine insbesondere drahtlose oder Ladekontakte aufweisende Ladestation (87) für die Hand-Werkzeugmaschine (200; 230; 260) und/oder einen von der Hand-Werkzeugmaschine (200; 230; 260) separaten Energiespeicher (202, 203), insbesondere einen Akkupack, aufweist.

10. Stapelanordnung nach einem der vorhergehenden Ansprüche, **dadurch gekennzeichnet, dass** der mindestens eine Transportbehälter (30; 130) mindestens einen Sensor zur Erfassung eines Betriebsstatus', insbesondere einer Anzahl von Betriebsstunden und/oder eines Serviceintervalls und/oder einer Störungsinformation und/oder eines Ladungszustands eines Energiespeichers (202, 203), der Hand-Werkzeugmaschine (200; 230; 260) aufweist und/oder dass in dem Transportbehälter (30; 130) ein Sensor zur Erfassung einer Mengeninformation über in dem Transportbehälter (30; 130) vorhandenes Verbrauchsmaterial vorgesehen ist.

11. Stapelanordnung nach einem der vorhergehenden Ansprüche, **dadurch gekennzeichnet, dass** mindestens ein Stapelelement (11-13; 21, 22) der Stapelanordnung (10; 20) eine Ortungseinrichtung zur drahtlosen Ortung des Stapelelements (11-13; 21, 22) oder der Stapelanordnung (10; 20) anhand eines Bediengeräts aufweist.

12. Stapelelement als Bestandteil einer Stapelanordnung (10; 20) oder zur Verwendung in einer Stapelanordnung (10; 20), insbesondere nach einem der vorhergehenden Ansprüche, wobei die Stapelanordnung (10; 20) mindestens zwei in einer Stapelrichtung (S) aufeinander stapelbare Stapelelemente (11-13; 21, 22) aufweist, von denen zumindest eines von einem Transportbehälter (30; 130) gebildet ist, der einen Behälterkorpus (31; 131) mit einer Stauaufnahme (37; 137) aufweist, die eine Maschinenaufnahme (82; 182) für eine elektrische oder pneumatische Hand-Werkzeugmaschine (200; 230; 260) aufweist, wobei das Stapelelement (11-13; 21, 22) mindestens eine Busschnittstelle (61, 62) zur Übertragung von Daten und/oder Energie zwischen den Stapelelementen (11-13; 21, 22) der Stapelanordnung (10; 20) aufweist, wobei die mindestens eine Busschnittstelle (61, 62) beim Unterstapeln unter ein Stapelelement (11-13; 21, 22) oder Aufstapeln auf ein Stapelelement (11-13; 21, 22) der Stapelanordnung (10; 20) eine Busverbindung (60; 160) zwischen den benachbarten Stapelelementen (11-13; 21, 22) bildet oder zur Herstellung einer Busverbindung (60; 160) zu einem auf das Stapelelement aufgestapelten oder unter das Stapelelement untergestapelten weiteren Stapelelement (11-13; 21, 22) ausgestaltet ist, wobei die Busschnittstelle (61, 62) des Stapelelementes (11-13; 21, 22) mit einer Maschinenschnittstelle (89; 189) zum Anschluss einer Serviceschnittstelle (205; 265) der Hand-Werkzeugmaschine (200; 230; 260) verbunden ist oder eine Maschinenschnittstelle (89; 189) aufweist, wobei die Maschinenschnittstelle (89; 189) zur Übertragung von Daten und/oder elektrischer Energie und/oder Druckluft vorgesehen ist, **dadurch gekennzeichnet, dass** die Maschinenschnittstelle (89; 189) eine Drahtlos-Übertragungsschnittstelle zur drahtlosen Übertragung von Daten und/oder Energie zu der Hand-Werkzeugmaschine (200; 230; 260) aufweist.

13. Stapelelement nach Anspruch 12, **dadurch gekennzeichnet, dass** es als eine Stapelbasis zum Aufstapeln und/oder Unterstapeln mindestens eines weiteren Stapelelements bildet und/oder dass es eine drahtlose oder leitungsgebundene Einspeiseschnittstelle (72), insbesondere einen Anschluss für ein elektrisches Energienetz, zum Einspeisen von elektrischer Energie und/oder Druckluft in die Busverbindung (60; 160) und/oder eine insbesondere einen Steckverbinder (67) aufweisende Kommunikationsschnittstelle (73) zum drahtlosen oder leitungsgebundenen Anschluss der Busverbindung (60; 160) an ein Kommunikationsnetz, insbesondere ein Local Area Network, und/oder zur Kommunikation mit einem Bediengerät aufweist.

14. Transportbehälter (30; 130) für eine elektrische oder pneumatische Hand-Werkzeugmaschine (200; 230; 260), der einen Behälterkorpus (31; 131) mit einer Stauaufnahme (37; 137) aufweist, in der eine Maschinenaufnahme (82; 182) für die Hand-Werkzeugmaschine (200; 230; 260), wobei der Transportbehälter (30; 130) als ein Stapelelement (11-13; 21, 22) für eine Stapelanordnung (10; 20) nutzbar ist, wobei der Transportbehälter (30; 130) mit seiner Unterseite auf eine Stapelbasis (14, 24), insbesondere einen weiteren Transportbehälter (30; 130) oder einen Staubsauger, aufstapelbar ist und/oder mit seiner Oberseite eine Stapelbasis (14, 24) für einen weiteres aufstapelbares Stapelelement (11-13; 21, 22), insbesondere einen Transportbehälter (30; 130), bildet, wobei der Transportbehälter (30; 130) zur Übertragung von Daten und/oder Energie zwischen den Stapelelementen (11-13; 21, 22) der Stapelanordnung (10; 20) mindestens eine Busschnittstelle (61, 62) aufweist, die beim Aufeinanderstapeln der Stapelelemente (11-13; 21, 22) eine Busverbindung (60; 160) zu einer Busschnittstelle (61, 62) des untergestapelten oder aufgestapelten Stapelelements (11-13; 21, 22) bildet oder zur Herstellung einer Busverbindung (60; 160) zu einem auf den Transportbehälter (30; 130) aufgestapelten oder unter den Transportbehälter (30; 130) untergestapelten weiteren Stapelelement (11-13; 21, 22) ausgestaltet ist, wobei die Busschnittstelle (61, 62) des Transportbehälters (30; 130) mit einer Maschinenschnittstelle (89; 189) zum Anschluss einer Serviceschnittstelle (205; 265) der Hand-Werkzeugmaschine (200; 230; 260) verbunden ist oder eine Maschinenschnittstelle (89; 189) aufweist, wobei die Maschinenschnittstelle (89; 189) zur Übertragung von Daten und/oder elektrischer Energie und/oder Druckluft vorgesehen ist, **dadurch gekennzeichnet, dass** die Maschinenschnittstelle (89; 189) eine Drahtlos-Übertragungsschnittstelle zur drahtlosen Übertragung von Daten und/oder Energie zu der Hand-Werkzeugmaschine (200; 230; 260) aufweist.

15. Transportbehälter nach Anspruch 14, **dadurch gekennzeichnet, dass** er eine drahtlose oder leitungsgebundene Einspeiseschnittstelle (72), insbesondere einen Anschluss für ein elektrisches Energienetz, zum Einspeisen von elektrischer Energie und/oder Druckluft in die Busverbindung (60; 160) und/oder eine insbesondere einen Steckverbinder (67) aufweisende Kommunikationsschnittstelle (73) zum drahtlosen oder leitungsgebundenen Anschluss der Busverbindung (60; 160) an ein Kommunikationsnetz, insbesondere ein Local Area Network, und/oder zur Kommunikation mit einem Bediengerät aufweist und/oder dass die Maschinenaufnahme (82; 182) in einem Behältereinsatz (80; 180) vorgesehen ist, der auf einem Boden der Stauaufnahme (37; 137) abgestützt ist und gegen eine Bewegung entlang des Bodens anhand von Befestigungsmitteln (184) ortsfest festlegbar ist und/oder sich an mindestens einer Umfangsseitenwand, welche die Stauaufnahme (37; 137) seitlich begrenzt, abstützt, wobei vorteilhaft an dem Behältereinsatz (80; 180) bei in der Stauaufnahme (37; 137) angeordneten Behältereinsatz (80; 180) mit der Busschnittstelle (61, 62) verbundene Verbindungsmittel zur Herstellung einer Verbindung mit der Hand-Werkzeugmaschine (200; 230; 260) angeordnet sind.

## Claims

1. Stack assembly (10; 20) with at least two stack elements (11-13; 21, 22) stackable on top of one another in a stacking direction (S), of which at least one is represented by a transport container (30; 130) having a container body (31; 131) with a stowage receptacle (37; 137) having a machine receptacle (82; 182) for an electric or pneumatic hand-operated power tool (200; 230; 260), wherein the stack elements (11-13; 21, 22) have bus interfaces (61, 62) for the transmission of data and/or energy between the stack elements (11-13; 21, 22) of the stack assembly (10; 20), wherein the bus interfaces (61, 62) form a bus connection (60; 160) between the stack elements (11-13; 21, 22) during the stacking of the stack elements (11-13; 21, 22) or in the stacked state of the stack elements (11-13; 21, 22), wherein the bus interface (61, 62) of the transport container (30; 130) is connected to a machine interface (89; 189) or has a machine interface (89; 189) for connecting a service interface (205; 265) of the hand-operated power tool (200; 230; 260), wherein the machine interface (89; 189) is provided for the transmission of data and/or electric energy and/or compressed air, **characterised in that** the machine interface (89; 189) has a wireless transmission interface for the wireless transmission of data and/or energy to the hand-operated power tool (200; 230; 260).

2. Stack assembly according to claim 1, **characterised in that** at least one stack element (11-13; 21, 22) of the stack assembly (10; 20) has bus interfaces (61, 62) connected to one another and provided for communication with a stack element (11-13; 21, 22) stacked below and stacked above, so that stack elements (11-13; 21, 22) located in the stack assembly (10; 20) establish the bus connection (69; 160) between the upper and the lower stack assemblies (10;20), and/or **in that** the machine interface (89; 189) has connecting contacts for establishing an contacted connection to the hand-operated power tool (200; 230; 260).

3. Stack assembly according to claim 1 or 2, **characterised in that** at least one bus interface (61, 62) provided between two stack elements (11-13; 21, 22) comprises a wireless interface (61, 62) provided for data transmission and/or energy transmission or a wireless interface (61, 62) provided exclusively for data transmission or energy transmission.

4. Stack assembly according to any of the preceding claims, **characterised in that** the bus interfaces (61, 62), in particular wireless bus interfaces provided for the wireless transmission of energy, are positioned in alignment with one another in the stacked state of the stack elements (11-13; 21, 22), and/or **in that** coupling means (191, 192) of stacked stack elements (11-13; 21, 22), which are designed for wireless communication, are located on directly opposite walls or wall regions of the stacked stack elements (11-13; 21, 22), and/or held in a stable relative position by coupling means joining the stack elements in a manner to prevent pulling off in the stacking direction and/or by positive-locking contours of the stack elements, which are in positive engagement with one another.

5. Stack assembly according to any of the preceding claims, **characterised in that** the bus interfaces (61, 62) comprise electric contact surfaces which are in particular located on plug-in connectors (67) on the top side of a lower stack element (11-13; 21, 22) and on the underside of an upper stack element (11-13; 21, 22) placed above, which contact surfaces are oriented on the respective top side and underside in such a way that they establish the bus connection (60; 160) in the stacking process of the stack elements (11-13; 21, 22), and/or **in that** a plug-in axis of the plug-in connectors (67) extends parallel to the stacking direction (S), so that the plug-in connectors (67) can be plugged into one another by stacking one stack element (11-13; 21, 22) on top of another stack element (11-13; 21, 22).

6. Stack assembly according to any of the preceding claims, **characterised in that** the bus interfaces (61, 62) comprise at least one link plate (51, 54), which joins an upper stack element (11-13; 21, 22) to a lower stack element (11-13; 21, 22) of the stack assembly (10, 20) and is in the assembled state joined to a side wall section of the container body (31; 131) of the upper stack element (11-13; 21, 22) and preferably also to a side wall section of the container body (31; 131) of the lower stack element (11-13; 21, 22).

7. Stack assembly according to claim 6, **characterised in that** the at least one link plate (51, 54) is movably mounted on one of the stack elements (11-13; 21, 22), in particular rotatably of capable of linear movement, or has plugging means for plugging into at least one of the stack elements (11-13; 21, 22), and/or **in that** the at least one link plate (51, 54) comprises an in particular rotatable lock element (46), which locks two stack elements (11-13; 21, 22) to each other in a locking position and releases the stack elements (11-13; 21, 22) in a release position, wherein the lock element (46) is in the locking position in electric contact with bus contacts (63; 64) of the stack elements (11-13; 21, 22) joined by the lock element (46) and connects them electrically and in the release position is out of contact with the bus contacts (63; 64), and/or in the locking position positions transmission means of the stack elements (11-13; 21, 22) designed for wireless data transmission or energy transmission relatively closer to one another than in the release position.

8. Stack assembly according to any of the preceding claims, **characterised in that** at least one stack element (11-13; 21, 22) comprises a wireless or wired feed-in interface (72), in particular a connection for an electric energy network, for feeding electric energy and/or compressed air into the bus connection (60; 160), and/or a communication interface (73), having a plug-in connector (67) in particular, for the wireless or wired connection of the bus connection (60; 160) to a communication network, in particular a local area network, and/or for communication with a user interface, wherein it is expediently provided that the feed-in interface (72) comprises a provision device (74), in particular a transformer, for providing a supply voltage suitable for an electric hand-operated power tool (200; 230; 260) stored in the stack assembly (10; 20) by means of the electric energy or compressed air fed in via the feed-in interface (72).

9. Stack assembly according to any of the preceding claims, **characterised in that** at least one stack element (11-13; 21, 22) of the stack assembly (10; 20) comprises an in particular replaceable energy storage device (174) for providing electric energy in particular on the bus connection (60; 160), and/or a control device (199) for controlling at least one element, in particular a hand-operated power tool stored in a transport container, connected to the bus connection (60; 160), in particular for data input and/or data output, and/or **in that** the at least one transport container (30; 130) comprises at least one charging station (87) - in particular wireless or having charging contacts - for the hand-operated power tool (200; 230; 260), and/or an energy storage device (202, 203), in particular a battery pack, which is separate from the hand-operated power tool (200; 230; 260).

10. Stack assembly according to any of the preceding claims, **characterised in that** the at least one transport container (30; 130) comprises at least one sensor for the detection of an operating status, in particular a number of operating hours and/or a service interval and/or malfunction information and/or a state of charge of the energy storage device (202, 203) of the hand-operated power tool (200; 230; 260), and/or **in that** a sensor for the detection of quantity information on consumables stored in the transport container (30; 130) is provided in the transport container (30; 130).

11. Stack assembly according to any of the preceding claims, **characterised in that** at least one stack element (11-13; 21, 22) of the stack assembly (10; 20) comprises a location device for the wireless location of the stack element (11-13; 21, 22) or the stack assembly (10; 20) by means of the user interface.

12. Stack element as part of or for use with a stack assembly (10; 20), in particular according to any of the preceding claims, wherein the stack assembly (10; 20) comprises at least two stack elements (11-13; 21, 22) stackable on top of one another in a stacking direction (S), of which at least one is represented by a transport container (30; 130) having a container body (31; 131) with a stowage receptacle (37; 137) having a machine receptacle (82; 182) for an electric or pneumatic hand-operated power tool (200; 230; 260), wherein the stack element (11-13; 21, 22) has at least one bus interface (61, 62) for the transmission of data and/or energy between the stack elements (11-13; 21, 22) of the stack assembly (10; 20), wherein the at least one bus interface (61, 62) forms a bus connection (60; 160) between adjacent stack elements (11-13; 21, 22) or is designed to establish a bus connection (60; 160) to a further stack element (11-13; 21, 22) stacked above the stack element or below the stack element in the process of stacking, wherein the bus interface (61, 62) of the stack element (11-13; 21, 22) is connected to a machine interface (89; 189) or has a machine interface (89; 189) for connecting a service interface (205; 265) of the hand-operated power tool (200; 230; 260), wherein the machine interface (89; 189) is provided for the transmission of data and/or electric energy and/or compressed air, **characterised in that** the machine interface (89; 189) has a wireless transmission interface for the wireless transmission of data and/or energy to the hand-operated power tool (200; 230; 260).

13. Stack element according to claim 12, **characterised in that** it forms a stacking base for stacking at least one further stack element above or below, and/or **in that** it comprises a wireless or wired feed-in interface (72), in particular a connection for an electric energy network, for feeding electric energy and/or compressed air into the bus connection (60; 160) and/or a communication interface (73), having a plug-in connector (67) in particular, for the wireless or wired connection of the bus connection (60; 160) to a communication network, in particular a local area network, and/or for communication with a user interface.

14. Transport container (30; 130) for an electric or pneumatic hand-operated power tool (200; 230; 260), comprising a container body (31; 131) with a stowage receptacle (37; 137) having a machine receptacle (82; 182) for the hand-operated power tool (200; 230; 260), wherein the transport container (30; 130) can be used as a stack element (11-13; 21, 22) for a stack assembly (10; 20), wherein the transport container (30; 130) can be stacked by its underside onto a stacking base (14, 24), in particular a further transport container (30; 130) or a vacuum cleaner, and/or forms with its top side a stacking base (14, 24) for a further stackable stack element (11-13; 21, 22), in particular a transport container (30; 130), wherein the transport container (30; 130) comprises at least one bus interface (61, 62) for the transmission of data and/or energy between the stack elements (11-13; 21, 22) of the stack assembly (10; 20), which bus interface (61, 62) forms a bus connection (60; 160) to a bus interface (61, 62) of the stack element (11-13; 21, 22) stacked below or above in the stacking process of the stack elements (11-13; 21, 22) or is designed to establish a bus connection (60; 160) to a further stack element (11-13; 21, 22) stacked above or below the transport container (30; 130), wherein the bus interface (61, 62) of the transport container (30; 130) is connected to a machine interface (89; 189) or has a machine interface (89; 189) for connecting a service interface (205; 265) of the hand-operated power tool (200; 230; 260), wherein the machine interface (89; 189) is provided for the transmission of data and/or electric energy and/or compressed air, **characterised in that** the machine interface (89; 189) has a wireless transmission interface for the wireless transmission of data and/or energy to the hand-operated power tool (200; 230; 260).

15. Transport container according to claim 14, **characterised in that** it comprises a wireless or wired feed-in interface (72), in particular a connection for an electric energy network, for feeding electric energy and/or compressed air into the bus connection (60; 160) and/or a communication interface (73), having a plug-in connector (67) in particular, for the wireless or wired connection of the bus connection (60; 160) to a communication network, in particular a local area network, and/or for communication with a user interface, and/or **in that** the machine receptacle (82; 182) is provided in a container insert (80; 180), which is supported on a base of the stowage receptacle (37; 137) and can be secured in a fixed manner by means of fasteners (184) against a movement along the base and/or is supported on at least one circumferential side wall laterally bounding the stowage receptacle (37; 137), wherein connecting means connected to the bus interface (61, 62) for establishing a connection to the hand-operated power tool (200; 230; 260) are advantageously located on the container insert (80; 180) if the container insert (80; 180) is placed in the stowage receptacle (37; 137).

## Revendications

1. Système empilé (10 ; 20) avec au moins deux éléments empilés (11-13 ; 21, 22) empilables l'un sur l'autre dans une direction d'empilage (S), dont au moins un est formé par un récipient de transport (30 ; 130), qui présente un corps de récipient (31 ; 131) avec un logement de rangement (37 ; 137), qui présente un logement de machine (82 ; 182) pour une machine-outil portative électrique ou pneumatique (200 ; 230 ; 260), dans lequel les éléments empilés (11-13 ; 21, 22) présentent des interfaces de bus (61, 62) pour le transfert de données et/ou d'énergie entre les éléments empilés (11-13 ; 21, 22) du système empilé (10 ; 20), dans lequel les interfaces de bus (61, 62) forment lors de l'empilage des éléments empilés (11-13 ; 21, 22) ou à l'état empilé des éléments empilés (11-13 ; 21, 22), une liaison de bus (60 ; 160) entre les éléments empilés (11-13 ; 21, 22), dans lequel l'interface de bus (61, 62) du récipient de transport (30 ; 130) est reliée à une interface de machine (89 ; 189) pour le raccordement à une interface de maintenance (205 ; 265) de la machine-outil portative (200 ; 230 ; 260) ou présente une interface de machine (89 ; 189), dans lequel l'interface de machine (89 ; 189) est prévue pour le transfert de données et/ou d'énergie électrique et/ou d'air comprimé, **caractérisé en ce que** l'interface de machine (89 ; 189) présente une interface de transfert sans fil pour le transfert sans fil de données et/ou d'énergie à la machine-outil portative (200 ; 230 ; 260).

2. Système empilé selon la revendication 1, **caractérisé en ce qu'**au moins un élément empilé (11-13 ; 21, 22) du système empilé (10 ; 20) présente des interfaces de bus (61, 62) reliées l'une à l'autre, qui sont prévues pour la communication avec un élément empilé (11-13 ; 21, 22) en dessous et un élément empilé au-dessus, de sorte que l'élément empilé (11-13 ; 21, 22) agencé dans le système empilé (10 ; 20) établit la liaison de bus (60 ; 160) entre les éléments empilés (11-13 ; 21, 22) supérieurs et inférieurs et/ou que l'interface de machine (89 ; 189) présente des contacts de raccordement pour l'établissement d'une liaison à contact avec la machine-outil portative (200 ; 230 ; 260).

3. Système empilé selon la revendication 1 ou 2, **caractérisé en ce qu'**au moins une interface de bus (61, 62) prévue entre deux éléments empilés (11-13 ; 21, 22) comprend une interface de bus sans fil (61, 62) prévue pour un transfert de données et/ou transfert d'énergie ou une interface de bus sans fil (61, 62) prévue exclusivement pour un transfert de données ou transfert d'énergie.

4. Système empilé selon l'une quelconque des revendications précédentes, **caractérisé en ce que** les interfaces de bus (61, 62), en particulier des interfaces de bus sans fil prévues pour le transfert sans fil d'énergie, sont positionnées alignées l'une avec l'autre à l'état empilé des éléments empilés (11-13 ; 21, 22) et/ou que des moyens de couplage (191, 192) communiquant sans fil d'éléments empilés (11-13 ; 21, 22) les uns sur les autres sont agencés au niveau de parois ou zones de paroi directement opposées les unes aux autres des éléments empilés (11-13 ; 21, 22) les uns sur les autres et/ou des moyens de couplage reliant de manière résistante à la traction les éléments empilés par rapport à la direction d'empilage et/ou des contours de correspondance de forme entrant en prise les uns avec les autres par correspondance de forme transversalement à la direction d'empilage des éléments empilés sont maintenus dans une position relative stable l'un par rapport à l'autre.

5. Système empilé selon l'une quelconque des revendications précédentes, **caractérisé en ce que** les interfaces de bus (61, 62) comprennent des surfaces de contact électriques agencées en particulier au niveau de connecteurs enfichables (67) au niveau de la face supérieure d'un élément empilé inférieur (11-13 ; 21, 22) et de la face inférieure d'un élément empilé supérieur (11-13 ; 21, 22) empilé sur la partie inférieure, qui sont orientés au niveau de la face supérieure et face inférieure concernée de telle sorte qu'ils établissent la liaison de bus (60 ; 160) lors de l'empilage des éléments empilés (11-13 ; 21, 22), et/ou qu'un axe d'enfichage des connecteurs enfichables (67) s'étend parallèlement à la direction d'empilage (S) de sorte que les connecteurs enfichables (67) peuvent être enfichés l'un dans l'autre par empilage d'un élément empilé (11-13 ; 21, 22) sur un autre élément empilé (11 - 13 ; 21, 22).

6. Système empilé selon l'une quelconque des revendications précédentes, **caractérisé en ce que** les interfaces de bus (61, 62) comprennent au moins une patte (51, 54), qui relie un élément empilé supérieur (11-13 ; 21, 22) à un élément empilé inférieur (11-13 ; 21, 22) du système empilé (10 ; 20) et est reliée à l'état monté à une section de paroi latérale du corps de récipient (31 ; 131) de l'élément empilé supérieur (11-13 ; 21, 22), de préférence aussi à une section de paroi latérale du corps de récipient (31 ; 131) de l'élément empilé inférieur (11-13 ; 21, 22).

7. Système empilé selon la revendication 6, **caractérisé en ce que** l'au moins une patte (51, 54) est logée mobile, en particulier de manière rotative et/ou linéaire, au niveau d'un des éléments empilés (11-13 ; 21, 22) ou présente des moyens d'enfichage à enficher dans au moins un des éléments empilés (11-13 ; 21, 22) et/ou que l'au moins une patte (51, 54) comprend un élément de verrou (46) logé en particulier de manière rotative, qui verrouille l'un à l'autre dans une position de verrouillage deux éléments empilés (11-13 ; 21, 22) et libère les éléments empilés (11-13 ; 21, 22) dans une position de libération, dans lequel l'élément de verrou (46) est dans la position de verrouillage en contact électrique avec des contacts de bus (63 ; 64) des éléments empilés (11-13 ; 21, 22) reliés par l'élément de verrou (46) et les relie électriquement et est dans la position de libération hors contact avec les contacts de bus (63 ; 64) et/ou des moyens de transfert des éléments empilés (11-13 ; 21, 22) configurés pour le transfert de données sans fil ou le transfert d'énergie sont positionnés relativement plus près l'un de l'autre dans la position de verrouillage que dans la position de libération.

8. Système empilé selon l'une quelconque des revendications précédentes, **caractérisé en ce qu'**au moins un élément empilé (11-13 ; 21, 22) présente une interface d'alimentation sans fil ou filaire (72), en particulier un raccord pour un réseau d'énergie électrique, pour l'alimentation d'énergie électrique et/ou d'air comprimé dans la liaison de bus (60 ; 160) et/ou une interface de communication (73) présentant en particulier un connecteur enfichable (67) pour le raccordement sans fil ou filaire de la liaison de bus (60 ; 160) à un réseau de communication, en particulier un Local Area Network, et/ou pour la communication avec un appareil de commande, dans lequel il est prévu de manière appropriée que l'interface d'alimentation (72) présente un dispositif de mise à disposition (74), en particulier un transformateur, pour la mise à disposition d'une tension d'alimentation adaptée à la machine-outil portative électrique (200 ; 230 ; 260) conservée dans le système empilé (10 ; 20) à l'aide de l'énergie électrique ou air comprimé alimenté par le biais de l'interface d'alimentation (72).

9. Système empilé selon l'une quelconque des revendications précédentes, **caractérisé en ce qu'**au moins un élément empilé (11-13 ; 21, 22) du système empilé (10 ; 20) présente un accumulateur d'énergie (174) en particulier remplaçable pour la mise à disposition en particulier d'énergie électrique sur la liaison de bus (60, 160) et/ou un dispositif de commande (199) pour la commande, en particulier pour l'entrée de données et/ou sortie de données, d'au moins un élément raccordé à la liaison de bus (60, 160), en particulier d'une machine-outil portative conservée dans un récipient de transport, et/ou que l'au moins un récipient de transport (30 ; 130) présente au moins une station de charge (87) en particulier sans fil ou présentant des contacts de charge pour la machine-outil portative (200 ; 230 ; 260) et/ou un accumulateur d'énergie (202, 203) séparé de la machine-outil portative (200 ; 230 ; 260), en particulier un bloc d'accumulateurs.

10. Système empilé selon l'une quelconque des revendications précédentes, **caractérisé en ce que** l'au moins un récipient de transport (30 ; 130) présente au moins un capteur pour la détection d'un état de fonctionnement, en particulier d'un nombre d'heures de fonctionnement et/ou d'un intervalle de maintenance et/ou d'une information d'incident et/ou d'un état de charge d'un accumulateur d'énergie (202, 203), de la machine-outil portative (200 ; 230 ; 260) et/ou qu'un capteur est prévu dans le récipient de transport (30 ; 130) pour la détection d'une information de quantité sur le matériau consommable présent dans le récipient de transport (30 ; 130).

11. Système empilé selon l'une quelconque des revendications précédentes, **caractérisé en ce qu'**au moins un élément empilé (11-13 ; 21, 22) du système empilé (10 ; 20) présente un dispositif de localisation pour la localisation sans fil de l'élément empilé (11-13 ; 21, 22) ou du système empilé (10 ; 20) à l'aide d'un appareil de commande.

12. Élément empilé en tant qu'élément constitutif d'un système empilé (10 ; 20) ou à utiliser dans un système empilé (10 ; 20), en particulier selon l'une quelconque des revendications précédentes, dans lequel le système empilé (10 ; 20) présente au moins deux éléments empilés (11-13 ; 21, 22) empilables l'un sur l'autre dans une direction d'empilage (S), dont au moins un est formé par un récipient de transport (30 ; 130), qui présente un corps de récipient (31 ; 131) avec un logement de rangement (37 ; 137), qui présente un logement de machine (82 ; 182) pour une machine-outil portative électrique ou pneumatique (200 ; 230 ; 260), dans lequel l'élément empilé (11-13 ; 21, 22) présente au moins une interface de bus (61, 62) pour le transfert de données et/ou d'énergie entre les éléments empilés (11-13 ; 21, 22) du système empilé (10 ; 20), dans lequel l'au moins une interface de bus (61, 62) lors de l'empilage sous un élément empilé (11-13 ; 21, 22) ou de l'empilage sur un élément empilé (11-13 ; 21, 22) du système empilé (10 ; 20), forme une liaison de bus (60 ; 160) entre les éléments empilés (11-13 ; 21, 22) adjacents ou est configurée pour l'établissement d'une liaison de bus (60 ; 160) avec un autre élément empilé (11-13 ; 21, 22) empilé sur l'élément empilé ou empilé sous l'élément empilé, dans lequel l'interface de bus (61, 62) de l'élément empilé (11-13 ; 21, 22) est reliée à l'interface de machine (89 ; 189) pour le raccordement d'une interface de maintenance (205 ; 265) de la machine-outil portative (200 ; 230 ; 260) ou présente une interface de machine (89 ; 189), dans lequel l'interface de machine (89 ; 189) est prévue pour le transfert de données et/ou d'énergie électrique et/ou d'air comprimé, **caractérisé en ce que** l'interface de machine (89 ; 189) présente une interface de transfert sans fil pour le transfert sans fil de données et/ou d'énergie vers la machine-outil portative (200 ; 230 ; 260).

13. Élément empilé selon la revendication 12, **caractérisé en ce qu'**il forme en tant que base d'empilage pour l'empilage au-dessus et/ou l'empilage en dessous d'au moins un autre élément empilé et/ou qu'il présente une interface d'alimentation sans fil ou filaire (72), en particulier un raccord pour un réseau d'énergie électrique, pour l'alimentation d'énergie électrique et/ou d'air comprimé dans la liaison de bus (60 ; 160) et/ou une interface de communication (73) présentant en particulier un connecteur enfichable (67) pour le raccordement sans fil ou filaire de la liaison de bus (60 ; 160) à un réseau de communication, en particulier un Local Area Network, et/ou pour la communication avec un appareil de commande.

14. Récipient de transport (30 ; 130) pour une machine-outil portative électrique ou pneumatique (200 ; 230 ; 260), qui présente un corps de récipient (31 ; 131) avec un logement de rangement (37 ; 137), dans lequel un logement de machine (82 ; 182) pour la machine-outil portative (200 ; 230 ; 260), dans lequel le récipient de transport (30 ; 130) est utilisable en tant qu'élément empilé (11-13 ; 21, 22) pour un système empilé (10 ; 20), dans lequel le récipient de transport (30 ; 130) est empilable avec sa face inférieure sur une base d'empilage (14, 24), en particulier un autre récipient de transport (30 ; 130) ou un aspirateur, et/ou forme avec sa face supérieure une base d'empilage (14, 24) pour un autre élément empilé (11-13 ; 21, 22) empilable dessus, en particulier un récipient de transport (30 ; 130), dans lequel le récipient de transport (30 ; 130) présente au moins une interface de bus (61, 62) pour le transfert de données et/ou d'énergie entre les éléments empilés (11-13 ; 21, 22) du système empilé (10 ; 20), qui forme lors de l'empilage des éléments empilés (11-13 ; 21, 22) une liaison de bus (60 ; 160) avec une interface de bus (61, 62) de l'élément empilé (11-13 ; 21, 22) empilé en dessous ou empilé au-dessus ou est configuré pour l'établissement d'une liaison de bus (60 ; 160) avec un autre élément empilé (11-13 ; 21, 22) empilé sur le récipient de transport (30 ; 130) ou empilé sous l'élément de transport (30 ; 130), dans lequel l'interface de bus (61, 62) du récipient de transport (30 ; 130) est reliée à une interface de machine (89 ; 189) pour le raccordement d'une interface de maintenance (205 ; 265) de la machine-outil portative (200 ; 230 ; 260) ou présente une interface de machine (89 ; 189), dans lequel l'interface de machine (89 ; 189) est prévue pour le transfert de données et/ou d'énergie électrique et/ou d'air comprimé, **caractérisé en ce que** l'interface de machine (89 ; 189) présente une interface de transfert sans fil pour le transfert sans fil de données et/ou d'énergie vers la machine-outil portative (200 ; 230 ; 260).

15. Récipient de transport selon la revendication 14, **caractérisé en ce qu'**il présente une interface d'alimentation sans fil ou filaire (72), en particulier un raccordement pour un réseau d'énergie électrique, pour l'alimentation d'énergie électrique et/ou d'air comprimé dans la liaison de bus (60 ; 160) et/ou une interface de communication (73) présentant en particulier un connecteur enfichable (67) pour le raccordement sans fil ou filaire de la liaison de bus (60 ; 160) à un réseau de communication, en particulier un Local Area Network, et/ou pour la communication avec un appareil de commande et/ou que le logement de machine (82 ; 182) est prévu dans un insert de récipient (80 ; 180), qui s'appuie sur un fond du logement de rangement (37 ; 137) et peut être fixé fixe contre un mouvement le long du fond à l'aide de moyens de fixation (184) et/ou s'appuie sur au moins une paroi latérale circonférentielle, qui délimite latéralement le logement de rangement (37 ; 137), dans lequel des moyens de liaison reliés à l'interface de bus (61, 62) sont agencés de manière avantageuse au niveau de l'insert de récipient (80 ; 180) pour un insert de récipient (80 ; 180) agencé dans le logement de rangement (37 ; 137) pour l'établissement d'une liaison avec la machine-outil portative (200 ; 230 ; 260).
